(19) Europäisches Patentamt / European Patent Office / Office européen des brevets

(11) EP 2 427 747 B1

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **10718575.3**

(22) Anmeldetag: **04.05.2010**

(51) Int Cl.:
***G01M 5/00*** *(2006.01)* ***G01M 7/00*** *(2006.01)*
***G01N 29/04*** *(2006.01)* ***G01N 29/46*** *(2006.01)*

(86) Internationale Anmeldenummer:
**PCT/EP2010/056052**

(87) Internationale Veröffentlichungsnummer:
**WO 2010/128056 (11.11.2010 Gazette 2010/45)**

(54) **VERFAHREN UND VORRICHTUNG ZUR PRÜFUNG DER STANDSICHERHEIT EINES MASTES**

METHOD AND DEVICE FOR TESTING THE STABILITY OF A POLE

PROCÉDÉ ET DISPOSITIF D'EXAMEN DE LA STABILITÉ D'UN MÂT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.05.2009 DE 102009002818**

(43) Veröffentlichungstag der Anmeldung:
**14.03.2012 Patentblatt 2012/11**

(73) Patentinhaber:
- **Spaltmann, Horst**
  **46487 Wesel-Blumenkamp (DE)**
- **Meyer, Axel**
  **46487 Wesel-Bislich (DE)**

(72) Erfinder:
- **SPLATMANN, Horst**
  **46487 Wesel-Blumenkamp (DE)**
- **ZAHLTEN, Wolfhard**
  **58300 Wetter (DE)**
- **EUSANI, Renato**
  **42659 Solingen (DE)**
- **HORTMANNS, Michael**
  **41464 Neuss (DE)**

(74) Vertreter: **Isfort, Olaf**
**Schneiders & Behrendt PartmbB**
**Rechts- und Patentanwälte**
**Huestraße 23**
**(Kortumkarree)**
**44787 Bochum (DE)**

(56) Entgegenhaltungen:

| | |
|---|---|
| **EP-A1- 0 379 622** | **EP-A1- 1 070 961** |
| **EP-A1- 1 630 537** | **WO-A2-2007/052239** |
| **CA-A1- 2 484 456** | **DE-A1- 10 008 201** |
| **DE-A1- 19 531 858** | **DE-A1- 19 701 247** |
| **DE-A1-102005 038 033** | **FR-A1- 2 876 797** |
| **US-A- 5 212 654** | **US-A1- 2003 128 149** |
| **US-B1- 6 505 130** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Prüfung der Standsicherheit eines auf einem Untergrund stehenden Mastes oder eines ähnlichen stehenden Systems.

In der EP 0 379 622 A1 ist ein Verfahren beschrieben bei dem die Auslenkung der Mastspitze anhand eines mechanischen Modells berechnet werden kann. Als Maß für die Standsicherheit des Mastes wird bei dem vorbekannten Verfahren die berechnete Auslenkung der Mastspitze bei Einwirkung einer beliebigen Kraft ins Verhältnis gesetzt zu derjenigen Auslenkung, die sich theoretisch ergeben würde, wenn eine sehr hohe Drehsteifigkeit des zu prüfenden Mastes im Fundamentbereich angenommen wird. Externe Einflüsse, wie die Einwirkung von Wind oder eine Mannlast, spielen bei dieser Betrachtung keine Rolle.

Die WO 2007/052239 A2 offenbart ein Verfahren zur Erfassung des Zustandes eines Mastes, bei dem der Mast künstlich in Schwingung versetzt und das dadurch erzeugte Frequenzspektrum mittels Beschleunigungssensoren erfasst wird. Das Schwingungsverhalten des Mastes wird bezüglich Resonanzen und Dämpfung interpretiert, um Informationen zum Zustand des Mastes zu erhalten. Durch einen Vergleich des erfassten Schwingungsverhaltens mit vorab bestimmten Eigenschaften kann eine Aussage über den Zustand des Mastes getroffen werden.

Die DE 10 2005 038033 A1 zeigt ein Verfahren zur Prüfung der Stand- und/oder Biegefestigkeit von Masten, bei dem ein Mast mittels eines Unwuchterregers oder eines Kraftimpulses in Schwingung versetzt und das entsprechende Schwingungsverhalten mittels Beschleunigungssensoren erfasst wird. Durch Vergleich des Schwingungsverhaltens mit Referenzwerten kann auf die Stand- und/oder Biegefestigkeit des Mastes zurückgeschlossen werden. Bei dem vorbekannten Verfahren wird die Mastauslenkung bei der Schwingungserregung direkt gemessen.

In der DE 197 01 247 A1 wird ein Verfahren zum Prüfen der Standsicherheit eines Mastes beschrieben, bei dem der Mast mit einer ansteigenden Biegekraft belastet und dabei seitlich ausgelenkt wird und bei dem der Mast nach Beendigung des Belastungsvorganges wieder entlastet wird und hierbei einer sich auf Null reduzierenden Rückstellkraft unterliegt.

Masten werden beispielsweise als Träger von Beleuchtungen (z.B. Flutlichtmasten), Verkehrsschildern, Ampeln, Seilen wie Freileitungen für Strom oder Seile für Seilbahnen (z.B. Hochspannungsmasten, Oberleitungsmasten von Eisenbahnen oder Straßenbahnen) oder Antennen (z B Sendemasten für Radio, Fernsehen oder Mobilfunk) eingesetzt. Ein Strommast ist ein beispielsweise aus Holz oder Metall bestehender, im Untergrund verankerter Pfahl oder Pfeiler mit wenigstens einem im oberen Bereich befestigten stromführenden elektrischen Leiter.

Vor allem Umwelteinflüsse wie Bodenfeuchtigkeit und Wind oder Vandalismus können einen Mast oder ein ähnliches stehendes System beispielsweise durch Korrosion, Materialermüdung oder Rissbildung beschädigen und die Standsicherheit gefährden. Die Standsicherheit eines Mastes ist daher in regelmäßigen Abständen zu überprüfen. Es ist also festzustellen, ob ein zu überprüfender Mast derart beschädigt ist, dass dieser ausgetauscht werden muss.

Um die Standsicherheit eines Mastes zu prüfen, wird vielfach mit Hilfe eines mobilen Gerätes eine horizontal wirkende Last auf die Masten aufgebracht. Die dabei auftretenden Auslenkungen werden gemessen. Nach dem Entfernen der Last wird anschließend kontrolliert, ob der Mast seine Ausgangsposition wieder erreicht hat. Diese Methode ist in vielen Fällen nachteilhaft und nicht zerstörungsfrei da z.B.:

- beschädigte Masten ihre Ausgangsposition nicht mehr erreichen und dann in der Regel schief stehen.
- die aufgebrachten Lasten höher sind als die tatsachlich möglichen Lasten durch eine Windeinwirkung. Die Masten können dabei durch die Prüflast beschädigt werden, obwohl sie noch standsicher waren.

Schiefstehende oder beschädigte Masten müssen in der Regel sofort ausgetauscht werden, insbesondere dann, wenn die Masten spannungsführende Beseilung tragen. Dies ist für die Betreiber ein erheblicher logistischer Aufwand, der in der Regel kurzfristig zu organisieren ist. Die Prüfmethoden mit Lasteinleitung haben weiterhin den Nachteil, dass sie nur Fehler unterhalb der Lasteinleitungsstelle mit prüfen. Fehlerhafte Stellen oberhalb der Lasteinleitung werden hierdurch nicht geprüft.

Eine weitere Methode bei Holzmasten ist das Anbohren der Masten mit Hilfe eines speziellen Bohrgerätes. Dabei wird die Kraft aufgezeichnet, die für einen konstanten Bohrfortschritt erforderlich ist. Nimmt die Kraft ab, lässt dies auf schadhafte Stellen innerhalb des Holzquerschnittes schließen. Diese Methode hat ebenfalls verschiedene Nachteile:

- zunächst ist die Methode nicht zerstörungsfrei;
- da in der Regel nur am Fuß gebohrt wird, können Aussagen auch nur für diesen Bereich gemacht werden. Streng genommen ist nur die Bohrstelle selbst bewertbar, eine Aussage zum Verhalten des Fundamentes als Ganzes ist nicht möglich.

Eine aufwändige Methode ist das Prüfen mit Hilfe spezieller Ultraschallgeräte. Diese Prüfung ist zunächst einmal diskret, d.h. es wird immer nur eine bestimmte Messstelle bzw. ein bestimmter Querschnitt geprüft, Um ein ganzheitliches Bild zu erlangen, müssen die Messungen an verschiedenen Stellen des Mastes durchgeführt werden. Dies ist relativ aufwändig, es kann nur darauf geschlossen werden, ob die geprüften Stellen einen Schaden aufweisen oder nicht. Eine direkte statische Bewertung ist nicht möglich.

Verfahren zur Prüfung der Standsicherheit eines Mastes, gemäß denen ein Mast statisch belastet wird, sind beispielsweise aus den Druckschriften DE 1 573 752 sowie EP 0 638 794 B1 bekannt. Maß für die Standsicherheit ist gemäß diesen Druckschriften die Auslenkung eines Mastes bei einer vorgegebenen Kraft, mit der ein Mast beaufschlagt wird.

Die DE 299 10 833 U betrifft eine mobile Prüfeinheit zum Messen der Standsicherheit eines Mastes, bestehend aus einem sich am Erdboden abstützenden und mit dem Mastfuß zu verbindenden Gestells, welches Mittel zum Belasten des Mastes mit einer Prüflast umfasst. Am Gestell ist eine erste Messeinheit, zur Kontrolle der durch die Prüflast verursachten Mastauslenkung, angebracht. Eine vom Gestell mechanisch unabhängige, zweite Messeinheit dient zum Ermitteln von Bewegungen der ersten Messeinheit. Diese Prüfeinheit ist relativ aufwendig und kann insbesondere nicht leicht zu einem zu prüfenden Mast transportiert werden.

Die Druckschrift DE 100 28 872 A1 offenbart ein Verfahren der eingangs genannten Art, für das Überprüfen der Standsicherheit eines Betonfundamentes. Eines in Gitterbauweise erstellten Freileitungsmastes wird ein Kraftimpuls auf den Eckstiel ausgeübt und die Reaktion der Umgebung mit Hilfe von seismographischen Sensoren gemessen sowie ausgewertet. Dieses Verfahren kann keine genauen Ergebnisse für unterschiedliche Masttypen liefern.

Darüber hinaus ist bekannt, an einem Mast in einer gewünschten Höhe eine um den Mast rotierende Masse anzubringen. Der Mast wird so in Schwingung versetzt, die ein Maß für die Standsicherheit darstellen sollen. Ein derartiges Verfahren, gemäß dem ein Mast auf diese Weise periodisch mit einer Kraft beaufschlagt wird, ist beispielsweise der DE 103 00 947 A1 zu entnehmen. Mit Hilfe von Beschleunigungssensoren wird das Schwingverhalten des Mastes ermittelt. Das Schwingverhalten wird anhand verschiedener Kriterien bewertet. Hieraus wird auf die Standsicherheit des untersuchten Mastes geschlossen. Es handelt sich bei einem derartigen Verfahren nachteilhaft ebenfalls um ein relativ ungenaues, nicht standardisiertes Verfahren. Ein derartiges Verfahren ist insbesondere dann ungenau, wenn das Schwingungsverhalten von den Umgebungsbedingungen abhängig ist. Dies gilt vor allem für einen Mast, der Freileitungen trägt. In Abhängigkeit von der herrschenden Temperatur verändert sich nämlich der Seildurchhang und damit das Schwingungsverhalten bzw. die Eigenfrequenz eines zu untersuchenden Mastes. Es gibt also Abweichungen im Schwingungsverhalten, die auf jeweils herrschende Umgebungsbedingungen zurückzuführen sind und nicht etwa auf aufgetretene Beschädigungen eines Mastes, die seine Standsicherheit gefährden könnten.

Aus der Druckschrift EP 1 517 141 A geht ein Verfahren zur Überprüfung der Standsicherheit, insbesondere der Korrosionsbeeinträchtigung von Metallmasten hervor, die teilweise in einen Untergrund eingelassen sind, Der Metallmast wird in Schwingungen versetzt und diese Schwingungen werden mit einer Messvorrichtung gemessen. Die dabei erhaltenen Schwingungsmessdaten werden mit aufgezeichneten Schwingungsmessdaten eines intakten identischen Mastes verglichen. Treten Abweichungen zwischen den erhaltenen und den aufgezeichneten Schwingungsmessdaten auf, so deuten diese Abweichungen auf eine Beeinträchtigung hin. Nachteilhaft muss für jeden neuen Mast das Schwingungsverhalten eines intakten Mastes neu ermittelt werden. Für jeden neuen Mast muss neu festgelegt werden, welche Abweichungen eines Schwingungsverhaltens so sind, dass ein Mast wegen fehlender Standsicherheit ausgetauscht werden muss. Unberücksichtigt bleiben solche Abweichungen des Schwingungsverhaltens, die auf die jeweils herrschenden individuellen Bedingungen zurückzuführen sind. Wiederum handelt es sich um ein nicht standardisiertes, relativ ungenaues Prüfverfahren.

Aufgabe der Erfindung ist es, ein Verfahren und eine Vorrichtung bereitzustellen, mit denen die Standsicherheit eines Mastes zerstörungsfrei und zuverlässig in praktikabler Weise überprüft werden kann. Zur Lösung der Aufgabe wird eine Eigenfrequenz eines zu prüfenden Mastes ermittelt. Die ermittelte Eigenfrequenz wird verwendet, um hieraus ein Maß für die Standsicherheit eines Mastes zu ermitteln, gemäß des Verfahrens nach Anspruch 1. In Abhängigkeit von dem aus der Eigenfrequenz ermittelten Maß für die Standsicherheit wird also festgestellt, ob ein Mast hinreichend standsicher ist.

Um eine Eigenfrequenz eines Mastes ermitteln zu können, genügt es, den zu prüfenden Mast geringfügig in Schwingungen zu versetzen und das Schwingungsverhalten mit einem oder mehreren Beschleunigungssensoren aufzuzeichnen. Der Mast muss und soll auch aus unten genannten Gründen keinen starken Belastungen ausgesetzt werden, zumal starke Belastungen den Mast beschädigen könnten. Um Eigenfrequenzen ermitteln zu können, ist es auch nicht erforderlich, einen zu prüfenden Mast in einer exakt definierten, immer identischen Weise in Schwingungen zu versetzen. Es ist häufig noch nicht einmal erforderlich und auch nicht erwünscht, künstlich Mastschwingungen zu erzeugen. Es kann also genügen, die Schwingungen aufzuzeichnen, die beispielsweise aufgrund von natürlichen externen Belastungen wie Wind verursacht werden.

Im Unterschied zum Stand der Technik wird mit Hilfe der ermittelten Eigenfrequenz, die Auslenkung des Kopfes des Mastes aufgrund von externer Belastung, berechnet und/ oder durch ein numerisches Verfahren ermittelt. Mit externer Belastung sind nicht die Gewichte gemeint, die ein Mast ständig bestimmungsgemäß zu tragen hat. Mit externer Belastung ist auch nicht das Eigengewicht des zu prüfenden Mastes gemeint. Eine externe Belastung resultiert insbesondere von einem herrschenden Wind. Wird ein Mast von einer Person bestiegen, so handelt es sich ebenfalls um eine externe Belastung im Sinne der Erfindung.

Anhand der Mastauslenkung wird die Standsicherheit beurteilt. Die Auslenkung des Mastes ist ein gut geeignetes Maß, um die Standsicherheit eines Mastes beurteilen zu können. Insbesondere ermöglicht dieses Maß verlässlichere Aussagen zur Standsicherheit im Vergleich zu dem Fall, gemäß dem lediglich das Schwingungsverhalten oder die Eigenfrequenz selbst als Maß für die Standsicherheit verwendet wird.

Daher kann das Verfahren in einfacher Weise und damit praktikabel reproduzierbar durchgeführt werden. Es ist daher möglich, Standsicherheitsprüfungen so durchzuführen, dass die erhaltenen Ergebnisse zuverlässig die tatsächliche Standsicherheit eines Mastes wiedergeben.

Eine Eigenfrequenz hängt von der Steifigkeit eines Mastes ab und erlaubt daher eine Beurteilung der Steifigkeit eines Mastes. Die Steifigkeit eines Mastes ist wiederum eine Größe, die es erlaubt, die Auslenkung eines Mastes infolge einer Belastung zu beurteilen. Eine geeignet ermittelte Steifigkeit kann bereits ausreichen, um die Standsicherheit gegenüber dem Stand der Technik verbessert ermitteln zu können. Dies gilt insbesondere dann, wenn aus den zulässigen Verformungen eine Sollsteifigkeit des Systems ermittelt wurde, mit der die geeignet ermittelte Steifigkeit verglichen werden kann. Eine ermittelte Steifigkeit ist insbesondere dann geeignet, wenn diese die zum Zeitpunkt der Messung vorhandene Gesamtsteifigkeit des Systems beschreibt.

Regelmäßig verjüngt sich ein Mast, so zum Beispiel ein aus Holz bestehender Mast (Holzmast) nach oben hin. Ein Mast wie zum Beispiel ein Strommast weist ferner Anbauteile auf. Solche Anbauteile sind im Fall eines Strommastes vor allem Befestigungselemente für elektrische Leitungen.

Außerdem wird ein Strommast durch die daran befestigten elektrischen Leiter mechanisch belastet. Diese Unterschiede im Vergleich zu einem einfachen, beispielsweise zylinderförmigen Mast wirken sich auf die Eigenfrequenz aus. Eine Eigenfrequenz eines Mastes hängt außerdem davon ab, in welcher Höhe beispielsweise Anbauteile angebracht sind. In einer Ausführungsform der Erfindung fließen daher in die Ermittlung des Verformungsverhaltens (Auslenkung oder Verschiebung des Mastkopfes) solche Systemparameter eines Mastes ein. Damit ist gemeint, dass die Berechnung oder numerische Ermittlung der Auslenkung auch Systemparameter eines Mastes berücksichtigt. Umfasst eine Berechnung oder numerische Ermittlung der Auslenkung keine Systemparameter, so fließen in die Ermittlung der Auslenkung keine Systemparameter eines Mastes ein. Systemparameter sind

- Höhe des zu beurteilenden Mastes;
- Mastdurchmesser sowie hiervon ausgehend die Veränderung des Mastdurchmessers mit zunehmender und/ oder abnehmender Höhe;
- Material des Mastes wie zum Beispiel Holzart (Buche, Eiche, Kiefer usw.), Stahl, Aluminium, Beton usw.;
- Anzahl von Seilen bei Masten mit Beseilung;
- Seildurchmesser von Seilen bei Masten mit Beseilung;
- Material oder Gewicht von Seilen, soweit vorhanden;
- Seildurchhang bei Masten mit Beseilung am Messtag;
- Höhe von Befestigungspunkten für Anbauten und/ oder Seile (soweit vorhanden);
- Gewicht von Anbauten wie zum Beispiel Befestigungselemente für elektrische Leiter / Seile;
- E-Modul des Mastes (ergibt sich in der Regel aus dem Material des Mastes - bei Holz wird vorteilhaft die am Messtag herrschende Materialfeuchte berücksichtigt);
- Abstand zwischen benachbarten Masten, die über eine Beseilung miteinander verbunden sind;
- Position von Zusatzmassen wie Lampen, Isolatoren, Traversen, Antennen, Leitern (um einen Mast besteigen zu können);
- Größe von Zusatzmassen wie Lampen, Isolatoren, Traversen, Antennen, Leitern (um einen Mast erklimmen zu können);

- Gewicht von Zusatzmassen wie Lampen, Isolatoren, Traversen, Antennen, Leitern (um einen Mast erklimmen zu können);

In einer Ausführungsform der Erfindung wird die Auslenkung eines Mastes bzw. ein entsprechendes Maß infolge einer externen Belastung durch Wind etc. unter Berücksichtigung der Lasten ermittelt, die ein Mast zu tragen hat, einschließlich des Eigengewichtes des Mastes. Die vom Mast bestimmungsgemäß zu tragenden Lasten und Massen haben Einfluss auf seine Eigenfrequenzen, so dass die Berücksichtigung dieser Lasten und Massen dazu beiträgt, verbessert die Standsicherheit beurteilen zu können. Fließen diese Lasten und Massen nicht in die Berechnung oder numerische Ermittlung der Auslenkung ein, so werden diese Lasten und Massen nicht im Sinne der vorliegenden Erfindung berücksichtigt.

Eine Eigenfrequenz eines Mastes wird allerdings nicht nur durch Lasten und Massen, mit denen ein Mast ständig belastet ist, beeinflusst, sondern vor allem auch, in welcher Höhe sich die zu tragenden Lasten und Massen befinden. In einer Ausführungsform der Erfindung wird daher die Höhe oder aber die Höhen berücksichtigt, in der sich die von einem zu prüfenden Mast zu tragenden Lasten und Massen befinden, umso weiter verbessert die Standsicherheit eines Mastes beurteilen zu können. Fließen solche Hohen nicht in die Berechnung oder numerische Ermittlung der Auslenkung (Verformung) bzw. eines entsprechenden Maßes ein, so werden diese Höhen nicht im Sinne der vorliegenden Erfindung berücksichtigt.

Die Eigenfrequenz eines Mastes wird außerdem durch die Position und Größe einer vom Mast zu tragenden Masse beeinflusst Es kommt beispielsweise darauf an, ob eine Masse einen Mast gleichmäßig belastet oder aber ungleichmäßig, weil eine Masse ausschließlich an einer Seite des Mastes befestigt ist. Ist eine Masse ausschließlich seitlich befestigt, so kommt es auch darauf an, wieweit der Massenschwerpunkt seitlich neben der Mastachse liegt. U. a. aus diesem Grund beeinflusst daher auch die Größe und Form einer Masse, also des Gegenstandes, dessen Gewicht betrachtet wird, die Eigenfrequenz. In vergleichbarer Weise spielt auch eine Rolle, wie hoch und / oder wie tief eine Masse ausgehend von einem Befestigungspunkt am Mast reicht. In einer Ausführungsform der Erfindung wird daher auch die Größe und/ oder Form eines solchen Gewichtes berücksichtigt, um so weiter verbessert die Standsicherheit eines Mastes beurteilen zu können.

In einer Ausführungsform der Erfindung werden die von einem Mast zu tragenden Massen einschließlich seines Eigengewichtes, die Höhen, in der sich diese Massen befinden, zu einem Wert zusammengefasst, der nachfolgend generalisierte Masse genannt wird In die generalisierte Masse $M_{gen}$ kann außerdem die Position, Form und/ oder Größe von zu tragenden Massen mit einfließen. Diese generalisierte Masse fließt in einer Ausführungsform der Erfindung in die Berechnung oder numerische Ermittlung eines Maß für die Auslenkung ein, um so weiter verbessert die Standsicherheit eines Mastes beurteilen zu können.

Die generalisierte Masse fließt insbesondere wie folgt in die numerische oder rechnerische Ermittlung der gesuchten Auslenkung ein:

$$\Omega^2 \sim \frac{1}{\text{generalisierte Masse}}$$

mit $\Omega = 2\pi$ Eigenfrequenz $f_e$.

Die generalisierte Masse unterscheidet sich von der wiegbaren Masse eines Mastes einschließlich der vom Mast zu tragenden Massen durch eine dynamische Komponente, die die Standsicherheit eines Mastes sowie seine Eigenfrequenzen beeinflussen.

Um eine generalisierte Masse ermitteln zu können, wird beispielsweise zunächst einmal das Gewicht des Mastes nebst der Verteilung des Gewichtes ermittelt. Hierzu wird beispielsweise der Durchmesser des Mastes am unteren Ende oberhalb seiner Verankerung sowie wenigstens der Durchmesser ermittelt, den der Mast an seiner Spitze aufweist. Der Durchmesser an der Mastspitze kann mit Hilfe von Konizitäten aus Tabellen ermittelt werden, in denen typische Abmessungen für Maste vorgegeben sind (z B RWE-Richtlinie). Dadurch wird beispielsweise im Fall eines sich homogen verjüngenden Holzmastes das Volumen des Mastes ermittelt. Durch Ermitteln der spezifischen Dichte des Materials, also zum Beispiel des Holzes in Abhängigkeit von der Holzart sowie durch Feuchtigkeitsmessungen am Messtag wird die spezifische Masse des Holzes am Messtag ermittelt. Hieraus wird das am Messtag maßgebliche Gewicht des Holzmastes ermittelt.

Die Anbauteile sind gewichtsmäßig in der Regel bekannt bzw. vorn Betreiber der Masten vorgegeben. Diese werden also letzten Endes durch konventionelles Wiegen ermittelt und zwar vor der Befestigung am Mast.

Es wird darüber hinaus ermittelt, in welcher Höhe die Anbauteile angebracht sind Dies geschieht durch Längen- bzw. Höhenmessungen.

Vorgegeben und damit bekannt ist das Material sowie der Durchmesser der Seile, die an einem Mast mit Beseilung hängen. Darüber hinaus wird der Abstand zwischen zwei benachbarten Masten ermittelt. Ferner kann eine Temperaturmessung durchgeführt werden. Ausgehend von einem vorbekannten Seildurchhang bei einer vorgegebenen Temperatur kann so berechnet werden, wie stark die Seile zwischen zwei Masten durchhängen und wie stark die Gewichtskraft ist, die auf den Mast aufgrund eines durchhängenden Seils ausgeübt wird. Alternativ wird der Seildurchhang am Messtag direkt gemessen. Die gemessene Temperatur dient dann zur Berechnung des Seildurchhanges bei den Temperaturen, die für die Bewertung maßgebend sind. Mit Hilfe dieses Seildurchhanges werden die Seilkräfte berechnet. Ungünstig können hohe Temperaturen sein, weil dann der Seildurchhang zunimmt, die Seilkräfte kleiner werden und die Rückstellfeder aus der Beseilung ein Minimum annimmt. Bevorzugt wird daher die Prüfung durchgeführt, wenn die herrschende Außentemperatur weniger als 30 °C beträgt. Vorzugsweise beträgt die Außentemperatur dann wenigstens 0 °C, um Verfälschungen aufgrund einer Eisbildung zu vermeiden

Es wird dann ermittelt, wie stark ein zu prüfender Mast senkrecht durch Seile belastet wird. Dieser Wert ist temperaturabhängig, da in Abhängigkeit von der Temperatur Seile unterschiedlich stark durchhängen.

Ein am Mast befestigtes, durchhängendes Seil wirkt mit einer senkrechten und mit einer horizontalen Kraft auf den Mast ein. Insbesondere werden im Zusammenhang mit Seilen daher auch solche Rückstellkräfte ermittelt, die auf den Mast in horizontaler Richtung einwirken. In einer Ausführungsform der Erfindung werden bei einem Mast mit Beseilung nur solche Auslenkungen als Folge von externen Belastungen als Maß für die Standsicherheit eines Mastes betrachtet, die senkrecht zu einem Seil erfolgen, welches vom Mast getragen wird. Es wurde festgestellt, dass vor allem solche Auslenkungen für die Beurteilung der Standsicherheit von Interesse sind, so dass das Verfahren dann auf diese Betrachtung reduziert werden kann. Die Steifigkeit eines Mastes mit Beseilung in einer Richtung parallel zum Verlauf der Beseilung ist demnach ca. 50 bis 100 mal höher im Vergleich zu der dazu senkrechten Richtung. Diese Steifigkeit bzw. die entsprechende Auslenkung bei externer Belastung wird daher vorzugsweise nicht ermittelt und somit vernachlässigt.

Die kritische Richtung ist also die vorgenannte zu Seilen senkrechte Richtung. Die Gefährdung der Standsicherheit ergibt sich insbesondere durch Windlast oder durch Mannlast. Die Mannlast spielt eine Rolle, wenn eine Person beispielsweise aus Wartungszwecken auf einen Mast hinaufklettert. Dies geschieht dann in der Regel seitlich einer Beseilung von Masten, so zum Beispiel seitlich von elektrischen Leitern von Strommasten, da andernfalls die betreffende Person nicht bis zu den Seilen heraufklettern kann.

Um Eigenschwingungen eines Mastes ermitteln zu können, werden in einer Ausführungsform der Erfindung Beschleunigungssensoren an dem Mast beispielsweise in einer definierten Höhe angebracht. Die genaue Höhe muss allerdings nicht bekannt sein. Die Beschleunigungssensoren müssen lediglich so hoch angebracht werden, dass auftretende Beschleunigungen gemessen werden können. Die Mindesthöhe, in der die Sensoren angebracht werden müssen, hängt daher auch von der Empfindlichkeit der Sensoren ab. Am Mastfuß sind keine Messungen möglich, da hier fast keine Schwingungen auftreten. Als hinreichend hat sich eine Höhe in Brusthöhe einer durchschnittlichen Person herausgestellt. Kommerziell erhältliche Sensoren sind regelmäßig hinreichend empfindlich, um in dieser Höhe Schwingungen mit ausreichender Genauigkeit messen zu können.

Grundsätzlich gilt, dass sich mit zunehmender Höhe der angebrachten Sensoren die Messgenauigkeit verbessert. Allerdings besteht dann das Problem der Anbringung. Um also das Verfahren besonders einfach durchführen zu können, werden die Sensoren vorzugsweise in einer Höhe angebracht, die von einem Bediener noch problemlos erreicht werden kann. Dadurch werden Zusatzausrüstungen wie Leitern entbehrlich. Gleichzeitig genügt die Messgenauigkeit in dieser Höhe.

In einer Ausführungsform der Erfindung werden Beschleunigungssensoren in unterschiedlicher Höhe angebracht, um so genauere Informationen über das Schwingungsverhalten eines Mastes ermitteln zu können. Hierdurch kann weiter verbessert die Standsicherheit eines Mastes beurteilt werden.

In einer ersten Ausführungsform der Erfindung wird nach Anbringung der Beschleunigungssensoren abgewartet, bis der Mast aufgrund von Umgebungseinflüssen wie Wind messbar schwingt. Dies reicht in vielen Fällen schon aus, um die gewünschten Eigenschwingungen ermitteln zu können. Sollte dies nicht ausreichen, so wird der Mast künstlich in Schwingungen versetzt. Dies kann in vielen Fällen manuell geschehen, indem ein Bediener entsprechend eine dynamische Kraft auf den Mast aufbringt.

In einer Ausführungsform der Erfindung wird beispielsweise mittels eines wiederkehrenden Signals, so zum Beispiel eines Tonsignals signalisiert, wann manuell Kraft auf einen Mast ausgeübt werden soll, um diesen geeignet in Schwingungen zu versetzen. Das Tonsignal erfolgt vorzugsweise so, dass Resonanzschwingungen erzeugt werden, um mit geringer Kraft geeignete Schwingungen zu erzeugen.

Der Takt, mit dem eine Kraft auf den Mast ausgeübt werden soll, um eine Eigenschwingung bzw. Resonanzschwingung zu erzeugen, kann aus einer ersten, noch relativ ungenauen Messung ermittelt werden. Eine erste Messung liefert ein Frequenzspektrum. Der erste Peak des Frequenzspektrums gehört zur ersten Eigenfrequenz. Wird der Zeitschrieb des Messsignals mit Hilfe einer Fourier-Analyse in ein Frequenzspektrum umgewandelt, so ergibt sich der Takt eines wiederkehrenden Tonsignals aus der Lage des ersten Peaks.

Eine erste Messung erfolgt also in einer Ausführungsform vorzugsweise so, dass kontinuierlich Schwingungen aufgrund von natürlichen Störungen aus der Umgebung gemessen werden. Eine zweite Messung, die als Folge einer künstlichen Anregung durchgeführt wird, findet vorzugsweise erst ab einer vorgegebenen Mindestbeschleunigung statt. Erst ab dieser Mindestbeschleunigung werden Messwerte aufgezeichnet. Es kann so besonders genau und einfach eine gesuchte Eigenfrequenz ermittelt werden.

In einer Ausführungsform des Verfahrens wird darauf geachtet, dass ein zu prüfender Mast nicht zu stark angeregt wird. Eine zu starke Anregung wird vorzugsweise wiederum mit Hilfe von wenigstens einem Beschleunigungssensor geprüft und beispielsweise mit Hilfe eines Signals angezeigt. Alternativ oder ergänzend werden bei zu starker Anregung Aufzeichnungen des Schwingungsverhaltens automatisiert gestoppt. Es ist nämlich von Vorteil, den quasistatischen Fall zu betrachten. Es ist nämlich zwischen der quasistatischen und der dynamischen Steifigkeit zu unterscheiden. Wird ein Mast zu schnellen Schwingungen angeregt, so ist die effektive Bodensteifigkeit sehr viel größer im Vergleich zum quasistatischen Fall. Physikalischer Hintergrund ist, dass aufgrund der Massenträgheit und des Strömungswiderstandes in den Bodenporen im dynamischen Fall das Wasser im Bodenbereich nicht schnell genug verdrängt werden kann. Hierdurch ergibt sich eine sehr viel größere Bodensteifigkeit im Vergleich zum quasistatischen Fall. Im quasistatischen Fall wird das Wasser verdrängt und so eine sehr viel geringere Steifigkeit im quasistatischen Fall erzielt. Für die Beurteilung der Standsicherheit ist der quasistatische Fall besonders relevant.

Das Verfahren wird daher vorteilhaft nur mit kleinen Anregungen durchgeführt und zwar auch dann, wenn unter Stabilitätsgesichtspunkten deutlich größere Schwingungsfrequenzen möglich wären.

In einer Ausführungsform der Erfindung wird der Mast daher durch eine Belastung angeregt, die zwischen 1 bis 10% der vorgesehenen maximalen Last liegt, die auf einen solchen Mast ausgeübt werden kann bzw. darf.

Eine zweite Messung, die darauf basiert, dass der Mast zuvor künstlich angeregt wurde, dient dazu, eine Eigenfrequenz genauer ermitteln zu können. Je mehr Messungen durchgeführt werden, umso geringer ist eine Messungenauigkeit in Bezug auf eine gesuchte Eigenfrequenz.

Dennoch kann das Verfahren bereits mit einer Messung erfolgreich durchgeführt werden. Es muss dann lediglich eine größere Ungenauigkeit in Kauf genommen werden. Werden Beschleunigungen mehrfach auf verschiedene Weise gemessen, so ergibt sich daraus also lediglich eine genauere Ermittlung der gesuchten Eigenfrequenz. Grundsätzlich wird das Verfahren dadurch jedoch nicht verändert.

In einer Ausführungsform der Erfindung wird ein geeignetes Maß für die Standsicherheit unter Verwendung der Beziehung

$$\Omega^2 \sim C_{gen}$$

ermittelt. Vorzugsweise wird ein geeignetes Maß für die Standsicherheit unter Verwendung der Gleichung

$$\Omega^2 = \frac{C_{gen}}{\text{generalisierte Masse}}$$

ermittelt.

$C_{gen}$ ist ein Steifigkeitsmaß, welches bereits als Maß verwendet werden kann, um eine Standsicherheit verbessert beurteilen zu können.

$$C_{gen} = \left( \frac{1}{\text{Drehsteifigkeit}} + \frac{1}{\text{Biegesteifigkeit}} \right)^{-1} + \text{Seilsteifigkeit}$$

Von besonderem Interesse ist die Drehsteifigkeit des Mastes, um die Standsicherheit eines Mastes beurteilen zu können. Diese berücksichtigt bei Messung mit einem Sensor alle Abweichungen gegenüber einem nicht geschädigten System.

Die Seilsteifigkeit bezieht sich auf die Seile, die von einem Mast mit Beseilung getragen werden. Die Seilsteifigkeit $C_s$ wird aus der Rückstellkraft ermittelt, die sich bei Auslenkung eines Mastes ergibt. Genauere Ausführungen dazu werden unten beschrieben.

Um die Biegesteifigkeif eines zu prüfenden Mastes zu ermitteln, wird vor allem auch die Mastlange ermittelt und berücksichtigt. Es ist zu unterscheiden zwischen der Gesamtlänge des Mastes und der Länge, die gegenüber der Geländeoberkante hervorragt. Bei der Ermittlung der Biegesteifigkeit spielt die Länge eine Rolle, die gegenüber dem Gelände hervorragt. Diese Länge wird daher zum Beispiel gemessen.

Sind Biegesteifigkeiten und erforderlichenfalls die Seilsteifigkeit ermittelt worden, so kann die Drehsteifigkeit berechnet werden. Vor allem die Drehsteifigkeit erlaubt eine Aussage darüber, wie die Standsicherheit eines Mastes zu beurteilen ist.

In einer Ausführungsform der Erfindung wird auf der Grundlage einer ermittelten Maststeifigkeit, insbesondere der Drehsteifigkeit eines zu prüfenden Mastes beispielsweise durch Simulation oder Rechnung ermittelt, wie stark sich der Mast aufgrund einer Windlast, insbesondere aufgrund einer maximal möglichen bzw. vorgesehenen Windlast verformen würde. Insbesondere wird die dadurch bewirkte Auslenkung des Mastkopfes (nachfolgend "Kopfpunktverschiebung" genannt) betrachtet. Diese Verformung oder Verschiebung ist ein besonders gut geeignetes Maß, um die Standsicherheit beurteilen zu können. Es hat sich nämlich herausgestellt, dass sämtliche Fehler, die die Standsicherheit in Frage stellen können, bereits in der ermittelten Information "Kopfpunktverschiebung" enthalten sind. Es hat sich herausgestellt, dass es daher nicht erforderlich ist genau festzustellen, wo der Fehler liegt, also beispielsweise in welcher Höhe. Überraschend wurde festgestellt, dass die Kopfpunktverschiebung bereits Informationen über Fehler enthält, die sich oberhalb der Beschleunigungssensoren befinden. Es lässt sich daher ableiten, ob die Standfestigkeit eines Mastes hinreichend gegeben ist. Überschreitet eine simulierte oder berechnete Auslenkung eines Mastkopfes einen vorgegebenen Grenzwert, so muss ein Mast ausgetauscht werden. Vorzugsweise gibt es mehrere verschiedene vorgegebene Grenzwerte, die den Grad der Gefährdung charakterisieren. So kann die Überschreitung eines höchsten vorgegebenen Grenzwertes bedeuten, dass ein Mast sofort ausgetauscht werden muss. Die Überschreitung eines darunter liegenden vorgegebenen Wertes kann bedeuten, dass ein Mast innerhalb eines festgelegten Zeltraums ausgetauscht werden muss.

Die Einstufung in Klassen orientiert sich in einer Ausführungsform der Erfindung an den Klassen, die in EN 40-3-3 in Tabelle 3 angegeben sind. Die EN 40-3-2:2000 verlangt, dass die Verformung an der Mastspitze in eine der Klassen fällt, die in Tabelle 3 der EN 40-3-3 angegeben sind (EN 40-3-2:2000, Abschnitt 5.2, Absatz b)). Das heißt: Ist die Verformung größer als die Verformung der Klasse 3, gilt der Mast sofort als nicht mehr zulässig. Im Rahmen der Bewertung wird diese Verformungsgrenze deshalb zweckmäßig als größter zulässiger Wert interpretiert. Die EN 40 gestattet es jedem Land festzulegen, welche Klasse die Masten national mindestens erfüllen müssen (EN 40-3-3:2000, Anhang B, Absatz B, 2). Im Rahmen der erfindungsgemäß vorgeschlagenen Bewertung wird davon ausgegangen, dass in Deutschland immer Klasse 1 Masten gesetzt werden müssen. Das heißt: Sind die Verformungen an der Mastspitze kleiner oder gleich den Grenzwerten für Klasse 1 in Tabelle 3 aus EN 40-3-3, so gilt der Mast als in Ordnung. Die Grenzwerte der Klassen 2 und 3 werden in einer Ausführungsform erfindungsgemäß benutzt, um eine verfeinerte Bewertung abgeben zu können. Das heißt, ein Mast, der Verformungen für Klasse 2 oder 3 aufweist, ist gegenüber dem Einbauzustand (Klasse 1) negativ verändert. Diese Veränderung stellt erfindungsgemäß eine Verminderung der Standsicherheit dar. Masten, die Verformungen kleiner als die Grenzwerte der Klasse 3 aufweisen, sind immer standsicher. Bei Klasse 2 und 3 Masten ist aber eine Veränderung eingetreten, die grundsätzlich das Ergebnis eines zeitabhängigen Prozesses ist. Die Masteigenschaften werden sich entsprechend kontinuierlich weiter verändern. Hieraus wurden dann empirisch und zwar vor allem für Holzmasten erfindungsgemäß folgende Empfehlungen abgeleitet:

Klasse 1: Mast ist uneingeschränkt in Ordnung
Klasse 2: nicht mehr besteigbar, aber noch standsicher
Klasse 3: nicht besteigbar, bedingt standsicher, muss innerhalb von 3 Monaten ausgetauscht werden
> Klasse 3: nicht mehr standsicher, muss sofort ausgetauscht werden ,

Es wird weiterhin unterstellt, dass die Verformungen direkt auch mit den zugehörigen Grenzlasten korrelieren. Das heißt: Ein Mast mit großen Kopfpunktverformungen besitzt eine kleinere Grenzlast als ein Mast mit kleinen Kopfpunktverformungen. Geht man von einer durchschnittlichen Überfestigkeit von 7% aus und unterstellt man, dass nur Klasse A Masten gemäß Tabelle 1 aus EN 40-3-3:2000 verwendet werden dürfen, so muss nach EN 40-3-2:2000 die kleinste Grenzlast mindestens ca. 1,5 mal so groß sein wie die Prüflast (charakteristische Last z.B. infolge Wind). Diese Bedingung gilt für alle Mastklassen, Da die Prüflasten aber für alle Lasten gleich sind heißt das, die Grenzlast für die Klasse 3 ist ca. 1,5 mal Prüflast und für die anderen Klassen ist die Grenzlast mindestens genauso groß, in der Regel sogar größer. Dieser Zusammenhang ist in Figur 17 dargestellt. Gezeigt wird ein schematischer Zusammenhang zwischen Verformungen und Grenzlasten mit Klassen nach EN 40. Die genaue Bruchlast (Grenzlast) wird durch das Verfahren nicht festgestellt. Die Bewertung der Standsicherheit liegt aber auf der sicheren Seite.

In einer Ausführungsform der Erfindung wird ermittelt, wie sich ein Mast in verschiedenen Höhe unter einer simulierten Windbelastung verschieben würde. Auch dann können zu jeder Höhe vorgegebene Grenzwerte festgelegt worden sein, um die Gefährdung eines Mastes weiter verbessert beurteilen zu können.

Beispielsweise bei Lichtmasten gibt es von Anfang an bekannte vorgegebene Grenzwerte für Mastauslenkungen, die nicht überschritten werden dürfen. Diese haben allerdings in vielen Fällen nichts mit der Standsicherheit, sondern mit Gebrauchsüberlegungen zu tun. Dennoch können solche Grenzwerte auch für die Beurteilung der Standsicherheit herangezogen werden.

In gleicher Weise kann eine Mastverformung aufgrund einer Mannlast betrachtet werden, um so die Standsicherheit beurteilen zu können.

Zur Durchführung des Verfahrens wird eine Prüfvorrichtung bereitgestellt, die über Eingabemittel wie eine Tastatur oder Mittel zur Spracherkennung und über Ausgabemittel wie zum Beispiel einen Bildschirm und/ oder Lautsprecher verfügt. Die Vorrichtung umfasst Mittel, um Schwingungen messen und insbesondere auch aufzeichnen zu können. Die Vorrichtung kann Sensoren umfassen, um die Feuchtigkeit eines Materials messen zu können, aus dem ein zu prüfender Mast besteht. Die Vorrichtung kann einen Temperatursensor umfassen, um die am Messtag herrschende Außentemperatur ermitteln zu können. Die Vorrichtung kann einen GPS™-Empfänger oder dergleichen umfassen, um die Position während einer Messung ermitteln zu können. Über die beispielsweise per GPS automatisiert ermittelte Position kann automatisiert aufgezeichnet werden, welcher Mast mit welchem Ergebnis geprüft wurde. Irrtümer können so minimiert werden. In einer Ausführungsform werden die per GPS ermittelten Koordinaten verwendet, um automatisiert die Mastabstände bzw. Feldlängen ohne weitere Abstandsmessungen zu erfassen. Die Vorrichtung kann drahtlose Kommunikationsmittel umfassen, um online gesuchte Daten bzw. Systemparameter zu erhalten, die von einem Betreiber eines Mastes bereitgestellt werden. Dies kann wiederum automatisiert unter Berücksichtigung des automatisiert ermittelten Standortes der Vorrichtung geschehen. Darüber hinaus benötigte Informationen bzw. Systemparameter können über Eingabemittel wie zum Beispiel einer Tastatur in die Vorrichtung eingegeben werden. Die Vorrichtung ist in einer Ausgestaltung darüber hinaus so eingerichtet, dass mittels der Vorrichtung an den jeweiligen Betreiber des untersuchten Mastes die ermittelten Prüfungsergebnisse automatisiert weitergeleitet werden, so dass beispielsweise entsprechende Datenbanken automatisiert aktuelle Informationen zur Standsicherheit erhalten. Ergänzend oder alternativ kann die Vorrichtung ein Prüfungsergebnis über ein Ausgabemittel wie Bildschirm oder Drucker zur Verfügung stellen. Die Vorrichtung umfasst insbesondere eine so programmierte Recheneinheit, dass nach Eingabe der benötigten Eingangsinformationen automatisiert ein gesuchtes Maß für die Standsicherheit ermittelt wird. Die Vorrichtung umfasst in einer Ausführungsform der Erfindung einen Taktgeber zur Vorgabe eines Taktes, mit der ein Mast zu Schwingungen angeregt werden soll. Darüber hinaus umfasst die Vorrichtung in einer Ausführungsform einen Zähler, der die Zahl der Anwendungsfälle registriert, Wartungsintervalle festzulegen oder aber um ein Abrechnungsmodell zu ermöglichen, gemäß dem pro Anwendung eine Gebühr zu entrichten ist In der Vorrichtung sind in einer Ausführungsform der Erfindung ein unterer und/ oder ein oberer Grenzwert gespeichert oder vorgesehen, um in Abhängigkeit vom unteren Grenzwert eine Aufzeichnung von Schwingungen zu starten bzw. in Abhängigkeit vom oberen Grenzwert die Aufzeichnung zu stoppen.

In einer Ausführungsform sind Grenzwerte für die angeregte Beschleunigung in der Vorrichtung gespeichert, die dazu genutzt werden, um bei zu großen Anregungsamplituden warnen zu können. Diese Warnung erfolgt über einen Warnton, der über den gleichen Lautsprecher ausgegeben wird wie das Taktsignal.

In einer weiteren Ausführungsform der Erfindung umfasst die Vorrichtung Mittel für die Berechnung einer spezifischen unteren und oberen Schranke für die zu messende Eigenfrequenz. Diese Grenzen werden in den Spektren durch die Vorrichtung beispielsweise auf einem Bildschirm dargestellt, so dass der Anwender die Möglichkeit hat, das gemessene Ergebnis auf Plausibilität zu prüfen. Hierdurch werden Fehler vermieden. Die Erfindung ermöglicht ein zerstörungsfreies Prüfverfahren mit Hilfe von Schwingungsmessungen, um die Standsicherheit von Masten bewerten zu können. Das Ergebnis des Verfahrens ist ein Parameter oder Maß, mit dem entschieden werden kann, ob die Standsicherheit des Mastes gegeben ist. Für diese Bewertung werden in Ausführungsformen der Erfindung unter anderem Kriterien wie die Kopfpunktverschiebung des Mastes infolge Horizontallasten (Wind) und Vertikallasten (Mannlasten) und/oder die Verdrehung des Fundaments berücksichtigt.

Durch eine aufwändigere Messtechnik (mit mehr Sensoren) kann durch die vorliegende Erfindung auch auf die statisch relevanten Querschnittswerte (Fläche und Trägheitsmoment) geschlossen werden. In diesem Fall sind auch Spannungsnachweise möglich und sinnvoll, da diese dann für die Restquerschnitte geführt werden.

Die Erfindung ist universell für Masten aus verschiedenen Materialien einsetzbar sein. Hierzu zählen z. B.:

- Holzmaste z.B. als Freileitungsmaste im Nieder- und Mittelspannungsbereich oder für Telefonleitungen
- Stahlmaste z.B. als Lampen-, Antennen-, Verkehrszeichen- oder Ampelmasten
- Aluminiummaste z.B. als Lampen-, Antennen-, Verkehrszeichen oder Ampelmasten

Die Masten können verschiedene Querschnitte haben, z.B.:

- Vollquerschnitt
- - Kreisringquerschnitt
- polygonartige Querschnitte (z B 6-Eck, 8-eck)

- abgestufter Querschnittsverlauf

- konischer Querschnittsverlauf

Das erfindungsgemäße Prüfverfahren ist unabhängig von der jeweiligen Querschnittsform verwendbar.

Durch die Erfindung können vor allem auch Anbauteile wie z.B. Lampen, Verkehrsschilder, Isolatoren, Traversen oder Seile, die durch ihre Masse und Trägheitsmomente die Eigenfrequenzen der Maste beeinflussen, rechnerisch berücksichtigt werden.

Weiterhin ist es durch die Erfindung möglich, die Rückstellkräfte durch evtl. vorhandene Beseilung (bei Freileitungsmasten) oder Abspannungen berücksichtigen zu können, da hierdurch die Gesamtsteifigkeit des Systems beeinflusst wird.

Die nachfolgend angegebenen Ausführungen verdeutlichen Ausführungsformen der Erfindung und zielen zunächst auf eine analytische Lösung ab. Das Prinzip des Verfahrens kann so leichter erläutert werden. Von der analytischen Lösung kann allerdings auch durch numerische Verfahren abgewichen werden, so zum Beispiel bei der Bestimmung der Schwingungsform. Außerdem kann z.B. die Drehfedersteifigkeit durch ein Iterationsverfahren bestimmt werden. Vor allem diese genannten Abweichungen von einer analytischen Lösung tragen zu einer Erhöhung der Genauigkeit bei. Außerdem erleichtern diese Abweichungen die universelle Einsetzbarkeit des Verfahrens.

Die nachfolgenden grundlegenden Erläuterungen werden für einfache Tagmaste oder Lampenmaste vorgestellt. Das zugrunde liegende Prinzip ist in gleicher Weise auch für andere Masttypen verwendbar.

Die folgenden Tabellen geben einen Überblick über die wesentlichen, verwendeten Variablen und Parameter.

| **Geometrie eines Mastes** | | | |
|---|---|---|---|
| | Masthöhe über Geländeoberkante (GOK) | $H$ | [m] |
| | Mastdurchmesser unten | $d_u$ | [m] |
| | Mastdurchmesser oben | $d_o$ | [m] |
| | Konizität | $\alpha$ | [-] |
| | Querschnitt unten | $A_u$ | [$m^2$] |
| | Querschnitt oben | $A_o$ | [$m^2$] |
| | Trägheitsmoment unten | $I_u$ | [$m^4$] |
| | Trägheitsmoment oben | $I_o$ | [$m^4$] |
| **Mast** | | | |
| | Masttyp | A, T | [-] |
| | Typ des Holzes | Kiefer (KI)<br>Lärche (LA) | [-] |
| | Feuchtigkeit des Holzes (an Sensorposition und am Fuß!), zusätzlich Höhe Sensor über GOK für die Durchführung des Beispiels erforderlich | $f_h$ | [%] |
| | Mastbiegesteifigkeit | $C_B$ | [N/m] |
| | Mastrotationsteifigkeit | $C_\varphi$ | [N/m] |
| | Gesamtsteifigkeit | $C_{Gesamt}$ | [N/m] |
| | generalisierte Masse infolge Biegung | $M_{gen,Mast,Bieg}$ | [kg] |
| | generalisierte Masse infolge Verdrehung | $M_{gen,Mast,Rot}$ | [kg] |
| | generalisierte Masse Mischanteil | $M_{gen,Mast,Misch}$ | [kg] |
| | generalisierte Masse Gesamt | $M_{gen,Mast,gesamt}$ | [kg] |

(fortgesetzt)

| | | | |
|---|---|---|---|
| **Leitung bei Mast mit Beseilung** | | | |
| | Feldlänge (Abstand zum nächsten Mast auf der linken Seite) | $L_L$ | [m] |
| | Feldlänge (Abstand zum nächsten Mast auf der rechten Seite) | $L_R$ | [m] |
| | Anzahl der Seile bzw. Isolatoren | $n$ | [-] |
| | Höhe der untersten Leitung | $h_l$ | [m] |
| | Leitungstyp | Stahl-Alu, Stahl | [-] |
| | Leitungsquerschnitt | $A_{L,u}$ | [$m^2$] |
| | Leitungsdurchhang (Links) | $d_L$ | [m] |
| | Leitungsdurchhang (Rechts) | $d_R$ | [m] |
| | Leitermasse pro Länge (Links) | $\rho_L$ | [kg/m] |
| | Leitermasse pro Länge (Rechts) | $\rho_R$ | [kg/m] |
| | Leitermasse | $M_L$ | [kg] |
| | generalisierte Masse der Leiter | $M_{gen,Leitung,gesamt}$ | [kg] |
| | Isolatormasse | $M_I$ | [kg] |
| | Vertikalabstand der Isolatoren (ggf. Horizontalabstand der Isolatoren erforderlich) | $s$ | [m] |
| | Dichte Leiter | $\rho_L$ | [$kg/m^3$] |
| | Seilfaktor | $\beta$ | [-] |
| | E-Modul Leiter | $E_L$ | [$kN/cm^2$] |
| | Horizontalkraft-Kraft aus dem Seil | $H$ | [N] |
| | Längssteifigkeit des Seils (E-Modul*Querschnittsfläche/ Seillänge) | $EA/L$ | [N/m] |
| | Steifigkeit senkrecht zur Leiterebene CL für eine einzige Leitung | $C_L$ | [N/m] |
| | Steifigkeit senkrecht zur Leiterebene | $C_{L,Gesamt}$ | [N/m] |
| | Steifigkeit in der Leiterebene CLS | $C_{LS}$ | [N/m] |
| **Messung** | | | |
| | Temperatur (am Messtag) | $T$ | [C] |
| | gemessene Eigenfrequenz (am Messtag) | $f_{gen}$ | [Hz] |
| | Höhe des Lastangriffspunkt der Seilkraft über GOK | $h_\mathrm{l}$ | [m] |
| | Hebelarm der Exzentrizität der Vertikallast V bezogen auf die Mastachse | $h_v$ | [m] |
| **zulässige Verformung** | | | [-] |
| | Zulässige Verformung für Klasse 1 | $d_{zul,1}$ | [m] |
| | Zulässige Verformung für Klasse 2 | $d_{zul,2}$ | [m] |
| | Zulässige Verformung für Klasse 3 | $d_{zul,3}$ | [m] |

Ziel ist es die Auslenkung der Mastspitze in senkrechter Richtung zur Leiterebene (falls vorhanden) infolge Horizontal- und Vertikallasten zu ermitteln. Um das System zu vereinfachen muss zuerst die Gesamtsteifigkeit berechnet werden. Es gibt mindestens drei Komponenten, nämlich:

1. die Mastbiegesteifigkeit

2. die Mastrotationssteifigkeit

3. die Leitersteifigkeit

4. (zusätzlich ggf. Abspannungen oder Hausanschlüsse etc.)

Figur 1 zeigt eine Prinzipskizze mit Masten 1, die im Untergrund 2 verankert sind. Die Masten tragen Seile bzw. Stromleiter 3. Die Stromleiter 3 sind mit Hilfe von Isolatoren 4 an den Masten 1 befestigt.

Sind Abspannungen vorhanden, so werden diese ebenfalls berücksichtigt. Dies ist ein Sonderfall, der nachfolgend nicht näher behandelt wird.

Es ist möglich, auch Masten zu bewerten die durch Hoch- oder Tiefzug beansprucht werden. Weiterhin können Masten berechnet werden, die an Knickstellen von Leitertrassen stehen. Die Rückstellkräfte aus den Leiterseilen werden dazu im Programm entsprechende angepasst. Damit ergeben sich dann die korrekten zugehörigen Steifigkeiten aus den Seilen. Die Figuren 2a und 2b zeigen schematisch die angesprochenen Situationen, also die Geometrie bei Hoch- oder Tiefzug und bei Masten an Knicken in Leitertrassen. Die Berechnung dieser Steifigkeiten wird nachfolgend allerdings nicht näher erläutert.

Die Steifigkeit hängt zudem von den Materialeigenschaften ab. Aus diesem Grund werden bei Holzmasten zusätzlich die Feuchte des Materials und die Umgebungstemperatur gemessen, da beide Parameter wichtige Holzeigenschaften beeinflussen.

Die Umgebungstemperatur ist am Messtag zu messen, um die am Messtag vorhandene Steifigkeit der Beseilung richtig zu erfassen. Bei der statischen Berechnung der Maste muss auch die Temperatur bei anderen Umgebungsbedingungen berücksichtigt werden. Diese hat Einfluss auf den Seildurchhang und damit auch Einfluss auf die Rückstellkräfte durch die Seile. Bei Systemen ohne Beseilung kann die Temperatur in der Regel vernachlässigt werden.

Die Berechnungen der Gesamtsteifigkeit und der Einzelanteile werden nachfolgend erläutert.

Nachfolgend wird auf den Einfluss der Materialfeuchte bei Holzmasten eingegangen. Die Materialfeuchte beeinflusst sowohl den E-Modul des Holzes als auch die zulässigen Spannungen. Da für die Verformungen und, falls diese geführt werden, auch für die statischen Nachweise im Wesentlichen der äußere Ring des Querschnittes relevant ist (ca. 5cm), wird die Feuchte vorzugsweise auch nur dort bestimmt. Dies erlaubt die Verwendung eines Messgerätes, welches beispielsweise mit Ultraschall arbeitet und damit ebenfalls keine Beschädigungen des Holzes hervorruft. Das Einschlagen oder Eindrucken von Elektroden ist also nicht erforderlich.

Die gemessene Holzfeuchte wird auch zur Bestimmung der korrekten Dichte des Materials und damit der Masse verwendet.

Figur 3 zeigt die prinzipielle Abhängigkeit des E-Moduls für Holz von der Holzfeuchte (für einen E-Modul von ca. 10.000 N/mm$^2$ bei der Feuchte 12% nach verschiedenen Quellen.

Ähnliche Abhängigkeiten finden sich z.B. in [12] (siehe Bild 4. Die dort angegebene Abhängigkeit der Biegesteifigkeit von der Feuchte ist dort allerdings größer. Eigene Erfahrungswerte zeigen, dass die Feuchte in den Masten mit zunehmendem Alter abnimmt. Abnehmende Feuchte wiederum führt zu einem höheren E-Modul und damit zu einer höheren Feuchte. Vorteilhaft wird daher in einer Ausführungsform der Erfindung dieser Effekt durch einen beispielsweise empirisch ermittelten Altersfaktor kompensiert und zwar vorteilhaft selbst dann, wenn die Korrektur des E-Moduls nach Figur 3 die tatsächliche Zunahme des E-Moduls bei geringer Feuchte unterschätzt. Falls im Laufe der Entwicklung die E-Modul Korrektur abhängig von der Feuchte angepasst wird, wird deshalb auch der empirische Altersfaktor vorteilhaft angepasst.

Figur 4, die aus [12] bekannt ist (siehe Figuren 4-11), zeigt die Abhängigkeit verschiedener Holzeigenschaften (property) von der Feuchte (moisture). Die Kurve A bezieht sich auf die Spannung (tension) parallel zur Holzfaser (grain), die Kurve B auf die Biegung (bending), die Kurve C auf die Kompression (compression) parallel zur Holzfaser, die Kurve D auf die Kompression senkrecht zur Holzfaser und die Kurve E auf die Spannung senkrecht zur Holzfaser.

Die Holzfeuchte u ist dabei wie folgt definiert:

$$u = \frac{m_w}{m_0} \cdot 100 = \frac{m_u - m_0}{m_0} \cdot 100 \quad \text{in } \%$$

mit:

$m_w$ Wassermasse in kg
$m_o$ Holzmasse bei 0% Feuchte in kg
$m_u$ Holzmasse nass, mit Feuchte u in kg

Die tatsächliche Dichte des Holzes bei einer bestimmten Feuchtigkeit u (in %) ergibt sich damit wie folgt:

$$\rho_u = \rho_o \cdot (1 + u/100)$$ bei einer Feuchte von 0% (darrtrocken),

oder

$$\rho_u = \rho_{12} \cdot (1 + u/100)/1{,}12$$ bei einer Feuchte von 12% (Raumklima)

Nimmt man die Dichte bei 0% Feuchte und rechnet sie auf Raumklima um, so erhält man folgende Werte für Dichten abhängig von der Holzfeuchte für 4 verschiedene Holzarten.

| Holzart | Dichte (0%) | Dichte (12%) |
|---|---|---|
| | kg/m$^3$ | kg/m$^3$ |
| **Fichte** | 429 | 480,5 |
| **Tanne** | 411 | 460,3 |
| **Kiefer** | 465 | 520,8 |
| **Lärche** | 527 | 590,2 |

Die nachfolgende Tabelle enthält typische Angaben aus diversen Quellen für den E-Modul und die Dichte verschiedener Holzarten bei der Feuchte von 12% (siehe [6]).

| | **Angaben für Feuchte =12%, T=20°, Luftfeuchte 65%** | | |
|---|---|---|---|
| | **parallel** | | |
| **Holzart** | **E-Modul (12%)** | **Dichte (12%)** | |
| | N/mm$^2$ | kg/m$^3$ | |
| **Fichte** | 10000 | 470 | |
| **Tanne** | 10000 | 470 | |
| **Kiefer** | 11000 | 520 | |
| **Lärche** | 12000 | 590 | |

Bei Spannungsnachweisen wird vorteilhaft der Einfluss der Feuchte auf die mechanischen Eigenschaften (Zug- und Druckfestigkeiten) ebenfalls berücksichtigt.

Nachfolgend wird der Einfluss der Umgebungstemperatur erläutert.

Bei einer Beseilung, die spannungsfrei ist, kann davon ausgegangen werden, dass die Seile die gleiche Temperatur wie die Umgebung haben. Die Temperatur der Umgebung wird daher dann am Messtag gemessen und als Temperatur der Seile angenommen.

Bei einer Beseilung unter Spannung ergibt sich die Seiltemperatur theoretisch korrekt auch durch die Leistung, die zum Messzeitpunkt in den Seilen anliegt. Diese Temperatur kann aus Angaben des Netzbetreibers berechnet werden.

Für die statischen Nachweise wird also in der Regel die Temperatur zum Messzeitpunkt berücksichtigt, um die Seildurchhänge bei den maßgebenden Temperaturen berechnen zu können. Basis hierfür sind die zum Messzeitpunkt gemessenen Feldlängen und Seildurchhänge.

Bei Holzmasten wird vorteilhaft ggf. die Temperatur zur Bestimmung der Holzkenngrößen mit berücksichtigt. Streng genommen hängen auch der E-Modul und die zulässigen Spannungen von der Temperatur ab. Bei der hier vorkommenden Variation der Temperatur während der Messungen ist der Einfluss aber in der Regel vernachlässigbar klein. Detaillierte Angaben zum Einfluss der Feuchte und der Temperatur finden sich z.B. in [12]. Diese können in einer Ausführungsform der Erfindung ebenfalls berücksichtigt werden.

Die nachfolgende, aus [12] entnommene Tabelle 4-16 verdeutlicht die Abhängigkeit des E-Moduls (MOE) von der Temperatur T.

Table 4-16. Percentage change in bending properties of lumberwith change in temperature[a]

| Property | Lumber grade[b] | Moisture content | $((P-P_{70})/P_{70})100 = A + BT + CT^2$ A | B | c | Temperature range $T_{min}$ | $T_{max}$ |
|---|---|---|---|---|---|---|---|
| MOE | All | Green | 22.0350 | -0.4578 | 0 | 0 | 32 |
| | | Green | 13.1215 | -0.1793 | 0 | 32 | 150 |
| | | 12% | 7.8553 | -0.1108 | 0 | -15 | 150 |
| MOR | SS | Green | 34.13 | -0.937 | 0.0043 | -20 | 46 |
| | | Green | 0 | 0 | 0 | 46 | 100 |
| | | 12% | 0 | 0 | 0 | -20 | 100 |
| | No. 2 or less | Green | 56.89 | -1.562 | 0.0072 | -20 | 46 |
| | | Green | 0 | 0 | 0 | 46 | 100 |
| | | Dry | 0 | 0 | 0 | -20 | 100 |

[a]For equation, *P* is property at temperature *T* in °F; $P_{70}$, property at 21 °C (70°F).
[b]SS is Select Structural.

Da der Temperatureinfluss berücksichtigt wird, werden selbst bei sehr großen Temperaturdifferenzen zutreffende Ergebnisse erzielt.

Nachfolgend wird der Einfluss des Alters erläutert. Bei Holz beeinflusst das Alter sowohl die Feuchtigkeit im Material als auch die Festigkeit. Ältere Masten weisen eine deutlich höhere Steifigkeit auf als junge Masten.

Der Einfluss des Alters auf die Steifigkeit wurde aus den Messdaten empirisch abgeleitet. Durch eine zunehmende Anzahl an Messdaten kann der Einfluss des Alterungseffektes kontinuierlich zugeschärft werden. Figur 5 zeigt einen empirisch ermittelten Einfluss, der die Zunahme des E-Moduls abhängig vom Alter in Jahren zeigt. Der Einfluss dieses Alterungseffektes wird in der Software durch die in Figur 5 gezeigte Korrekturfunktion berücksichtigt. Der zu untersuchende Mast wird für die weitere Analyse zunächst in ein generalisiertes System transformiert. Dies ist ein gängiges Verfahren, um ein komplexes System, das aus vielen Stäben, Knoten und Massen besteht, in einen äquivalenten Einmassenschwinger zu überführen. Der Einmassenschwinger hat die gleichen dynamischen Eigenschaften wie das komplexe Ursprungssystem. Dies bezieht sich insbesondere auf die Steifigkeit und auf die Eigenfrequenz des Systems. Üblicherweise wird der virtuelle Einmassenschwinger an der Stelle der maximalen Verformung der zugrunde gelegten Schwingungsform des Systems positioniert. Das ist hier die Mastspitze. Figur 6 verdeutlicht das Ausgangssystem und das generalisierte System.

Durch eine Energiebetrachtung und der Forderung, dass die Energie während einer Schwingperiode für beide Systeme gleich sein muss, ergeben sich die entsprechenden Formeln zur Bestimmung der Kenngrößen des generalisierten Ersatzsystems. Dies sind:

$M_{gen}$ generalisierte Masse und

$C_{gen}$ generalisierte Steifigkeit

Die Formeln zur Bestimmung der generalisierten Masse lauten:

$$E = \int_0^H \frac{1}{2} \cdot m(z) \cdot \dot{y}^2(z) dz = \frac{1}{2} \cdot M_{gen} \cdot \dot{y}^2(H)$$

$$\dot{y}(z) = y(z) \cdot \omega_e = y_{max} \cdot \phi(z) \cdot \omega_e$$

Die Energie E ist für beide Systeme gleich. Da das generalisierte System hier an der Stelle der maximalen modalen Verformung angebracht ist, gilt:

$$\dot{y}(H) = y(H) \cdot \omega_e = y_{max} \cdot \phi(H) \cdot \omega_e = y_{max} \cdot 1{,}0 \cdot \omega_e$$

Die generalisierte Masse ist dann:

$$M_{gen} = \int_0^H m(z) \cdot \phi^2(z)\,dz$$

Nimmt man für die Schwingungsform beispielsweise $\phi(z) = \left(\frac{z}{H}\right)^2$ an (parabelförmiger Verlauf), so erhält man folgende Gleichung für $M_{gen}$:

$$M_{gen} = \int_0^H m(z) \cdot \left(\frac{z}{H}\right)^4 dz$$

für m(z) = m = const. folgt dann

$$M_{gen} = m \cdot \frac{H}{5}$$

Die Eigenfrequenz $f_e$ des generalisierten Systems ist:

$$f_e = \frac{1}{2\pi} \cdot \sqrt{\frac{C_{gen}}{M_{gen}}} = \frac{\omega_e}{2\pi}$$

Die Bestimmung von $M_{gen}$ wird für die einzelnen Bauteile der Mastsysteme unten nochmals spezifisch erläutert. Die Bestimmung von $C_{gen}$ erfolgt hier über die Messung der Eigenfrequenz des Systems. Hierzu wird die o.g. Formel umgestellt:

$$C_{gen} = (2\pi \cdot f_e)^2 \cdot M_{gen} = \omega_e^2 \cdot M_{gen}$$

Die so ermittelte generalisierte Steifigkeit $C_{gen}$ ist die Gesamtsteifigkeit $C_{Gesamt}$ des Systems. Diese wird zur weiteren Analyse in ihre Einzelbestandteile aufgeteilt.

Die Gesamtsteifigkeit setzt sich aus mehreren Einzelanteilen zusammen, und zwar:

1. der Mastbiegesteifigkeit $C_B$

2. der Drehfedersteifigkeit des Fundaments $C_{\varphi,B}$, und

3. der Steifigkeit der Seile $C_{L,Gesamt}$

Diese Anteile kann man sich wie Federn vorstellen, die zur Berechnung der Gesamtsteifigkeit kombiniert werden müssen. Dabei sind die Drehfedersteifigkeit und die Mastbiegesteifigkeit als Reihenschaltung und die Leitersteifigkeit additiv als Parallelschaltung zu berücksichtigen, Die Gesamtsteifigkeit kann dann folgendermaßen berechnet werden:

$$C_{Gesamt} = C_{L,Gesamt} + \left(\frac{1}{C_B} + \frac{1}{C_{\varphi,B}}\right)^{-1}$$

Für volle Einspannung, das heißt die Drehfedersteifigkeit ist unendlich, gilt:

$$C_{\varphi,B} = \infty \;===>\; \frac{1}{C_{\varphi,B}} = 0$$

$$C_{Gesamt} = C_{L,Gesamt} + C_B$$

In den Figuren 7a bis 7c werden die Verformungsanteile schematisch dargestellt. Die Anteile $C_B$ und $C_{L,Gesamt}$ ergeben sich rein analytisch. Der Anteil $C_{\varphi,B}$ ist dann die einzige Unbekannte. Diese kann mit Kenntnis der gemessenen Frequenz dann aus dem Messergebnis berechnet werden.

Die Mastbiegesteifigkeit wird analytisch bestimmt. Figur 8 verdeutlicht die Herleitung zur Berechnung der Biegsteifigkeit $C_B$ exemplarisch für einen konischen Mast mit kreiszylindrischem Vollquerschnitt. Die Mastbiegesteifigkeit berechnet sich wie folgt.

$$\begin{aligned}
\delta &= \int_0^H \frac{M(z)\,m(z)}{EI(z)}\,dz \\
&= \int_0^H \frac{z^2}{E\frac{\pi}{64}(d_o - \alpha z)^4}\,dz \\
&= \frac{64}{E\pi}\int_{d_o}^{d_u} \frac{-\left(\frac{d_o - x}{\alpha}\right)^2}{x^4}\,\frac{dx}{\alpha} \\
&= -\frac{64}{\alpha^3 E\pi}\int_{d_o}^{d_u} \frac{d_o^{\,2} + x^2 - 2d_o x}{x^4}\,dx \\
&= \frac{64}{\alpha^3 E\pi}\left[-\frac{1}{3d_o} + \frac{d_o^{\,2}}{3d_u^{\,3}} + \frac{1}{3d_u} - \frac{d_o}{d_u^{\,2}}\right]
\end{aligned}$$

$$d_o - \alpha z = x$$

$$dz = \frac{-dx}{\alpha}$$

$$z = \frac{d_o - x}{\alpha}$$

$$C_B = 1/\delta \qquad [N/m]$$

$$= \frac{\alpha^3 E \pi}{64} [-\frac{1}{3d_o} + \frac{d_o^{\ 2}}{3d_u^{\ 3}} + \frac{1}{3d_u} - \frac{d_o}{d_u^{\ 2}}]^{-1}$$

Die Biegesteifigkeit des Mastes ergibt sich alleine aus der Geometrie und den mechanischen Eigenschaften. Dabei ist zu berücksichtigen, dass der E-Modul bei Holzwerkstoffen abhängig von der gemessenen Feuchte bestimmt wird. Über die Feuchtemessungen wird dieser Einfluss berücksichtigt.

Die genaue Erfassung geschädigter Querschnittswerte kann durch eine genauere Messmethode erfasst werden. Für die Bewertung der Standsicherheit genügt es aber, die Schädigungen des Mastes vollständig der noch zu bestimmenden Drehfeder $C_\varphi$ am Fuß zuzuweisen. Das heißt, der Mastschaft wird als nicht geschädigt in der Berechnung berücksichtigt. Alle Einflüsse, die die Steifigkeit des Gesamtsystems beeinflussen, werden virtuell dem Fundament zugewiesen. Die Verformungen am Mastkopf ergeben sich dann trotzdem in der gleichen Größenordnung wie bei einer detaillierten Aufteilung der Schädigungen auf den Mastschaft und auf das Fundament. Dies wurde durch Untersuchungen verifiziert.

Figur 18 zeigt, dass die Gesamtverformung unabhängig von der Verteilung der Steifigkeitsanteile untereinander praktisch gleich bleibt. Streuungen von Materialeigenschaften (z.B. beim E-Modul) wirken sich deshalb praktisch nicht auf die berechnete Verformung am Kopf aus, da hierfür die ermittelte Gesamtsteifigkeit maßgebend ist. Das heißt z.B.: Bei einer Überschätzung des tatsächlichen E-Moduls wird rechnerisch eine kleine Drehfedersteifgkeit berechnet. Bei einer Überschätzung des E-Moduls ist es umgekehrt. Die relevante Gesamtsteifigkeit ist in beiden Fällen ungefähr gleich, so dass auch die berechneten Verformungen in gleicher Größenordnung bleiben. Die berechnete Kopfverformung ist deswegen in besonderer Weise als Kriterium zur Bewertung der Standsicherheit geeignet. Diese analytische Vorgehensweise erlaubt es, mit nur einer mechanischen Messgröße sowie der Holzfeuchte und der Umgebungstemperatur auf die Gesamtsteifigkeit des Gesamtsystems zu schließen.

Nachfolgend wird auf die Drehfedersteifigkeit des Fundamentes
$C_\varphi$
Eingegangen.

Die Drehfedersteifigkeit wird in eine äquivalente horizontale Ersatzfeder transformiert. Hierdurch kann sie einfacher im generalisierten System berücksichtigt werden. Die Steifigkeit dieser Feder, die in Höhe des generalisierten Systems angebracht ist, kann wie folgt berechnet werden (Umrechnung der Drehfedersteifigkeit in eine äquivalente horizontale Ersatzfeder):

$$C_\varphi \ : \ Drehfeder\ Boden\ [\frac{N}{rad}]$$

$$C_{\varphi,B}:\ Eq.\ Biegesteifigkeit\ [\frac{N}{m}]$$

$$\frac{PH}{C_{\varphi}}H = \frac{P}{C_{\varphi,B}}$$

$$C_{\varphi,B} = \frac{C_{\varphi}}{H^2}$$

Die Drehfeder soll die Fundamentsteifigkeit und die ggf. vorhandenen Schädigungen des Mastes repräsentieren. Da die Standsicherheit letztendlich durch Berechnung der Maximalverformung unter quasistatischen Lasten berechnet wird, werden die dynamischen Messungen so durchgeführt, dass nicht der dynamische E-Modul des Bodens aktiviert wird. Dies bedeutet, dass dann die angeregten Schwingamplituden klein bleiben müssen.

Hintergrund ist, dass der dynamische E-Modul je nach Bodenart um einen Faktor von 2 bis 4 (zum Teil auch mehr) größer sein kann als der statische E-Modul des Bodens.

Figur 9 zeigt schematisch das statische System zur Umrechnung der virtuellen Drehfedersteifigkeit in eine äquivalente horizontale Ersatzfeder. Betrachtet man nur den horizontalen Auslenkungsanteil aus der Drehfeder, so ergibt sich am Mastkopf eine Auslenkung von H*phi (im Prinzip Mastlänge mal Verdrehwinkel).

Nachfolgend wird auf die Leitersteifigkeit ($C_L$) eingegangen. Um die gesamte Leitungssteifigkeit zu ermitteln, wird zuerst die Steifigkeit für eine einzige Leitung in senkrechter Richtung zur Leiterebene berechnet. Dabei werden ggf. unterschiedliche Längen der Seile im linken und rechten Feld berücksichtigt. Anschließend werden die Einzelsteifigkeiten zu einer generalisierten Gesamtsteifigkeit zusammengefasst. Das generalisierte System wird gedanklich an der Stelle der maximalen modalen Verformung $\delta_G$ positioniert.

Die Leitersteifigkeiten aus dem linken und rechten Feld (vom Mast aus gesehen) werden wie folgt berechnet.

$$C_L = \frac{\rho_L A_L g L_L}{8d_L} + \frac{\rho_R A_R g L_R}{8d_R}$$

$$C_{L,Gesamt} = \sum_i \alpha_i^2 C_{L_i}$$

$$\begin{cases} \alpha_i = \dfrac{\delta_i}{\delta_G} \\ \delta_G = \max(\delta_i) = 1\ \ (normierte\ \mathrm{mod}\,ale\ Verformung) \end{cases}$$

$$Z_i^* = \frac{z_i}{H}\ \ (normierte\ Höhe)$$

$$\delta_i = Z_i^{*2}\frac{C_{\varphi,B}}{C_B + C_{\varphi,B}} + Z_i^*\frac{C_B}{C_B + C_{\varphi,B}}$$

$$C_{L,Gesamt} = \sum_i [(Z_i^{*2} \frac{C_{\varphi,B}}{C_B + C_{\varphi,B}} + Z_i^* \frac{C_B}{C_B + C_{\varphi,B}})^2 C_{L_i}]$$

$$= \frac{C_L}{(C_B + C_{\varphi,B})^2}(C_{\varphi,B}^2 \sum_i Z_i^{*4} + 2C_B C_{\varphi,B} \sum_i Z_i^{*3} + C_B^2 \sum_i Z_i^{*2})$$

*Annahme:* $C_{L_i} = C_{L_j}\ i \neq j$

Die Leitersteifigkeiten für das linke und rechte Feld werden gleichzeitig berücksichtigt.

Die Berechnung der modalen Verformung $\delta_i$ ergibt sich aus der Reihenschaltung der Federn $C_B$ und $C_{\varphi,B}$. Da die Leiterseile in der Regel nicht an der Mastspitze positioniert sind, ergibt sich die korrekte modale Verformung $\delta_i$ ebenfalls über eine Energiebetrachtung. Dies führt zu den Vorfaktoren $Z_i^{*2}$ beim Drehfederanteil und $Z_i^*$ beim Biegeanteil.

Figur 10 zeigt schematisch das System zur Berechnung der Leitersteifigkeit. Die Höhe $h_1$ in der Figur 10 entspricht der Höhe $z_1$ in der o.g. Formel. Die Höhen der beiden anderen Seile $z_2$ und $z_3$ sind in der Figur 10 nicht angegeben.

Mit den zuvor entwickelten Formeln kann eine Gleichung für $C_{Gesamt}$ aufgestellt werden in der nur der Drehfederanteil unbekannt ist. Die Steifigkeit $C_{Gesamt}$ ergibt sich aus der gemessenen Frequenz und der generalisierten Masse.

Nachfolgend wird weiter auf die generalisierte Masse eingegangen.

Die generalisierte Masse setzt sich aus den Anteilen der an der Schwingung beteiligten Massen, Mast-, Leitungs-, Isolatoren- und zusätzlichen Massen, zusammen. Je nachdem wo die Massen im System positioniert sind, sind sie mehr oder weniger an der Schwingung beteiligt. Dies wird über die jeweils betrachtete Schwingungsform erfasst.

Nachfolgend wird auf die Schwingungsform und generalisierte Masse für den Mast eingegangen.

Die Schwingungsform setzt sich hier aus zwei Anteilen zusammen. Dies sind ein Anteil aus der reinen Biegung des Mastschaftes und ein Drehanteil aus der Verdrehung im Fundament. Durch die Kopplung diese Anteile entsteht bei der Herleitung ein zusätzlicher Mischanteil. Die für die Berechnung der generalisierten Masse anzusetzende Schwingungsform hat also letztendlich drei Komponenten:

1. Biegungsanteil

2. Verdrehungsanteil

3. und Mischanteile

Die generalisierte Masse ergibt sich ebenfalls wieder aus einer Energiebetrachtung für das Schwingende komplexe System und das vereinfachte generalisierte System. Das nachfolgende Schema zeigt exemplarisch die Berechnung der generalisierten Masse für den Mastschaft eines konischen Mastes mit kreiszylindrischem Vollquerschnitt. Der Parameter y(z) ist die anzusetzende normierte Schwingungsform (hier parabelförmig angesetzt $y(z) = (z/H)^2$), die an der Stelle der maximalen Verformung den Wert 1,0 annimmt. Die generalisierte Masse für einen konischen Mast mit kreiszylindrischem Vollquerschnitt berechnet sich wie folgt.

$$M_{Gen,M} = \int M(z) y(z)^2 dz$$

$$M(z) = \rho A(z) = \rho \frac{\pi}{4} d(z)^2 = \rho \frac{\pi}{4}(d_u + \alpha z)^2$$

$$y(z) = (\frac{z}{H})^2 \frac{C_{\varphi,B}}{C_B + C_{\varphi,B}} + (\frac{z}{H}) \frac{C_B}{C_B + C_{\varphi,B}}$$

$$M_{Gen} = \frac{\pi\rho}{4}\int_0^H \rho\frac{\pi}{4}(d_u+\alpha z)^2[(\frac{z}{H})^2\frac{C_{\varphi,B}}{C_B+C_{\varphi,B}}+(\frac{z}{H})\frac{C_B}{C_B+C_{\varphi,B}}]^2 dz$$

$$= \frac{\pi\rho}{4}(\frac{d_u^2 C_{\varphi,B}^2}{5}H + \frac{d_u^2 C_B C_{\varphi,B}}{2}H + \frac{d_u^2 C_B^2}{3}H +$$

$$\frac{d_u\alpha C_{\varphi,B}^2}{3}H^2 + \frac{4d_u\alpha C_B C_{\varphi,B}}{5}H^2 + \frac{d_u\alpha C_B^2}{2}H^2 +$$

$$\frac{\alpha^2 C_{\varphi,B}^2}{7}H^3 + \frac{\alpha^2 C_B C_{\varphi,B}}{3}H^3 + \frac{\alpha^2 C_B^2}{5}H^3)$$

Zusätzlich zu den generalisierten Massen infolge translatorischer Auslenkungen werden die Rotationsmassen (Eigenträgheitsmomente und Steineranteile), bei weit auskragenden Bauteilen berücksichtigt. Massen mit großer Exzentrizität (z.B. Isolatoren an Weitspanntraversen im Mittelspannungsbereich) können das Ergebnis signifikant beeinflussen und werden deshalb vorteilhaft berücksichtigt.

Weiterhin werden zusätzlich zum Anteil des Mastes selbst die mitschwingenden Massen von Anbauteilen wie z.B.: Leiterseile, Isolatoren und weitere Massen (z.B. Verkehrszeichen) berücksichtigt.

Die verwendete Schwingungsform hat einen deutlichen Einfluss auf die Berechnungsergebnisse, Vergleichsrechnungen haben gezeigt, dass die Übereinstimmung mit theoretischen Werten umso besser wird, je genauer die Schwingungsform beschrieben wird. Stimmt die Schwingungsform mit der tatsächlichen Schwingungsform überein, so liegt eine nahezu 100%-ige Übereinstimmung zwischen theoretischer Verschiebung bzw. Auslenkung und berechneter Verschiebung bzw. Auslenkung vor. Aus diesem Grund wird die Schwingungsform des Biegeanteils in einer Ausführungsform vorteilhaft nicht vorgegeben, sondern jeweils spezifisch, abhängig von den Mastkenngrößen (Geometrie, Querschnittswerte, Materialeigenschaften, Zusatzmassen etc.) berechnet. Dies kann wie folgt geschehen.

Zunächst wird die generalisierte Masse für Leiterseile betrachtet. Die generalisierte Masse der Leiterseile ergibt sich aus der anteiligen Seilmasse aus dem linken und rechten Feld (jeweils halbe Seilmasse im entsprechenden Feld) und aus der modalen Auslenkung $z_1^*$ am Angriffspunkt der Masse.

$$M_{Gen,L} = \sum_i M_{L_i} z_i^{*2}$$

$$= \frac{M_L}{(C_{\varphi,B}+C_B)^2}(C_{\varphi,B}^2\sum_i z_i^{*4} + 2C_B\sum_i z_i^{*3} + C_B^2\sum_i z_i^{*2})$$

$$\mathit{Annahme}:\ M_{L_i} = M_{L_j} \quad i \neq j$$

Die generalisierte Masse der Leiterseile selbst $M_L$ ergibt sich durch Ansatz einer linear veränderlichen Auslenkung. Dies bedeutet, es wird davon ausgegangen, dass sich nur der angeregte Mast bewegt und die benachbarten Maste in Ruhe bleiben. Außerdem werden Eigenbewegungen des Seiles vernachlässigt. Die generalisierte Masse der Leiterseile ist dann:

$$M_{L,gen} = \int_0^L m_L \cdot \left(\frac{z}{H}\right)^2 dz = m_L \cdot \frac{L}{3}$$

Die generalisierten Massen der Seile aus dem linken und rechten Feld werden überlagert. Damit ergibt sich:

$$M_{L,gen} = m_{L,links} \cdot \frac{L_{links}}{3} + m_{L,rechts} \cdot \frac{L_{rechts}}{3}$$

Die Länge L ist die Seillange zwischen zwei Masten. Diese ist größer als der Abstand der Maste im Feld (geringfügig länger, < 1 %).

Nachfolgend wird die generalisierte Masse für die Isolatoren betrachtet. Die generalisierte Masse der Isolatoren ergibt sich aus Isolatormasse und aus der modalen Auslenkung $z_1$* an der Position des Isolators:

$$M_{Gen,I} = \sum_i M_{I_i} z_i^{*2} =$$

$$\frac{M_I}{(C_{\varphi,B} + C_B)^2} (C_{\varphi,B}{}^2 \sum_i z_i^{*4} + 2C_B \sum_i z_i^{*3} + C_B{}^2 \sum_i z_i^{*2})$$

$$Annahmen: \; M_{I_i} = M_{I_j} \quad i \neq j$$

*Die Leitung und die dazugehörige Isolator liegen beide in der gleichen Höhe.*

Nachfolgend werden die generalisierten Massen für zusätzliche Massen betrachtet. Die generalisierte Masse von zusätzlichen Massen ergibt sich aus der jeweiligen Masse und aus der modalen Auslenkung $z_1$* an der Position der Zusatzmasse:

$$M_{Gen,Z} = \sum_i M_{Z_i} z'^{*2}_i =$$

$$\frac{M_Z}{(C_{\varphi,B} + C_B)^2} (C_{\varphi,B}{}^2 \sum_i z'^{*4}_i + 2C_B \sum_i z'^{*3}_i + C_B{}^2 \sum_i z'^{*2}_i)$$

Nachfolgend wird auf die analytische Bestimmung der Drehfedersteifigkeit eingegangen. Die Drehfedersteifigkeit kann mit den zuvor beschriebenen Formeln analytisch bestimmt werden. Die entsprechende Entwicklung des Formelapparates wird nachfolgend dargestellt.

$$\begin{cases} M_{Gen,Gesamt} = C_{L,Gesamt}\,\omega^{-2} \\ \quad = [C_{L,Gesamt} + (\frac{1}{C_B} + \frac{1}{C_{\varphi,B}})^{-1}]\omega^{-2} \\ \quad = \frac{C_{L,Gesamt}C_B + C_{L,Gesamt}C_{\varphi,B} + C_B C_{\varphi,B}}{C_B + C_{\varphi,B}}\omega^{-2} \\ M_{Gen,Gesamt} = M_{Gen,M} + M_{Gen,L} + M_{Gen,I} + M_{Gen,z} \end{cases} \Longrightarrow$$

$$[\frac{\pi\rho}{4}(\frac{d_u^{\;2}}{5}H + \frac{d_u\alpha}{3}H^2 + \frac{\alpha^2}{7}H^3) + (M_L + M_I)\sum_i z_i^{*4} + M_Z\sum_j z'^{*4}_j]C_{\varphi,B}^{\;2} +$$

$$[\frac{\pi\rho}{4}(\frac{d_u^{\;2}}{2}H + \frac{4d_u\alpha}{5}H^2 + \frac{\alpha^2}{3}H^3) + (M_L + M_I)\sum_i z_i^{*3} + M_Z\sum_j z'^{*3}_j]C_B C_{\varphi,B} +$$

$$[\frac{\pi\rho}{4}(\frac{d_u^{\;2}}{3}H + \frac{d_u\alpha}{2}H^2 + \frac{\alpha^2}{5}H^3) + (M_L + M_I)\sum_i z_i^{*2} + M_Z\sum_j z'^{*2}_j]C_B^2 =$$

$$\frac{1}{\omega^2}[(C_{L,Gesamt}\sum_i z_i^{*4} + C_B)C_{\varphi,B}^{\;2} + (2C_{L,Gesamt}\sum_i z_i^{*3} + C_B)C_B C_{\varphi,B} + C_B^{\;2}C_{L,Gesamt}\sum_j z_j^{*2}] \qquad \text{(Verdrehungsanteil)}$$

$$(A_1 - A_2)C_{\varphi,B}^{\;2} + (B_1 - B_2)C_{\varphi,B} + (C_1 - C_2) = 0 \qquad \text{(Mischanteil)}$$

$$C_{\varphi,B} = \frac{-B \pm \sqrt{B^2 - 4AC}}{2A} \qquad \text{(Biegungsanteil)}$$

Mit Hilfe dieser Ergebnisse kann ein statisches Ersatzsystem definiert werden. An diesem System werden dann die Auslenkungen infolge Vertikal- und Horizontallasten berechnet. Die Ermittlung der Drehfedersteifigkeit bzw. die Ermittlung des Verhältnisses zwischen Drehfedersteifigkeit und Biegesteifigkeit wird vorteilhaft mit einem Iterationsverfahren bestimmt. Dieses Vorgehen hat gegenüber der analytischen Lösung den großen Vorteil, dass es universeller ist. Anpassungen aufgrund anderer Systemeigenschaften brauchen so in der analytischen Lösung nicht implementiert werden. Die Ergebnisse des Iterationsverfahrens und der analytischen Lösung für den oben gezeigten Fall sind identisch.

Die Horizontallasten sind im wesentlichen Windlasten auf das System, die Vertikallasten sind Mannlasten und/oder Montagelasten. Die Größenordnung dieser Lasten ergibt sich aus den entsprechenden Vorschriften.

Nachfolgend wird auf die Bewertung von Masten eingegangen. Die Bewertung der Standsicherheit der Masten erfolgt über Verformungskriterien, die je nach System variieren können. Die Verformungen bzw. Auslenkungen der Masten werden am statischen Ersatzsystem mit den aus den Messungen bestimmten Steifigkeiten berechnet.

Die anzusetzenden Lasten ergeben sich aus entsprechenden Vorschriften.

Die berechneten Verformungen werden mit zulässigen Verformungen verglichen. Hierdurch können die Masten in verschiedene Klassen eingestuft werden.

Für Stahlmasten werden die Kriterien aus EN 40 verwendet. Dort werden folgende Grenzwerte für die Verformungen unter charakteristischen Lasten definiert.

Verformungskriterien für Metallmaste

Klasse 1: zulässig d = 4%*(H + w)

Klasse 2: zulässig d = 6%*(H + w)

Klasse 3: zulässig d = 10%*(H + w)

w ist die horizontale Ausladung, kann hier zu 0 gesetzt werden. Verformungen über Klasse 3 sind unzulässig. Für Freileitungsmasten aus Holz wurden Kriterien in Anlehnung an die EN 40 entwickelt. Aufgrund der stromführenden Beseilung und der Erfordernis zur Besteigbarkeit sind die Kriterien scharfer als bei Metallmasten.

Verformungskriterien für Holzmaste

Klasse 1: zulässig d=1,5%*H

Klasse 2: zulässig d=3,0%*H

Klasse 3: zulässig d=5,0%*H

Die Konsequenzen der jeweiligen Einstufung sind beispielsweise wie folgt. Konsequenzen der Einstufung für Holzmaste

Klasse 1: ohne Einschränkung,

Klasse 2: nicht mehr besteigbar, aber noch standsicher;

Klasse 3: nicht besteigbar, bedingt standsicher, muss innerhalb von 3 Monaten ausgetauscht werden,

> Klasse 4: nicht mehr standsicher, muss sofort ausgetauscht werden.

Nachfolgend werden Lastfälle betrachtet.

Es werden folgende Lastfälle untersucht:

1. Wind als Leiteinwirkung auf Mast, Leiterseile und Anbauteile

2. Wind auf vereiste Leiterseile + Wind auf Mast und Anbauteile

3. Montagelast (Mannlast)

Nachfolgend wird auf Windlast auf Mast, Leiterseile und Anbauteile eingegangen:
Die Windlasten werden z.B. in Anlehnung an VDE 210 bestimmt. Die Berechnung der Windlasten kann grundsätzlich allen zu berücksichtigenden Vorschriften angepasst werden. Dabei werden die Referenzwindgeschwindigkeiten $v_{ref}$ standortabhängig berücksichtigt. Die notwendigen Daten werden aus den entsprechenden Windzonenkarten (z.B. DIN 1055-4 neu [4], VDE 210 [3] entnommen.

Die Windlasten auf den Mast ergeben sich wie folgt

$$w_M = 1{,}1 \cdot q(z_H) \cdot c_M \cdot A_M$$

Der aerodynamische Beiwert $c_M$ ist abhängig von der Querschnittsform. Für kreiszylindrische Querschnitte wird $c_M$=0,7-0,8 verwendet. Der genaue Wert wird abhängig von der Reynolds-Zahl bestimmt.

Die Windlasten auf die Seile werden wie folgt berechnet:

$$w_S = q(z_S) \cdot c_S \cdot A_S$$

Anbauteile werden berücksichtigt, wenn sie signifikante Lasteinzugsflächen aufweisen (z.B. Verkehrszeichen). Kleinflächige Bauteile wie z.B. Isolatoren werden vorzugsweise vernachlässigt. Die Lasten auf Anbauteile werden wie folgt berücksichtigt:

$$w_A = q(z_A) \cdot c_A \cdot A$$

Dabei ist $q(z_A)$ der Geschwindigkeitsdruck in Hohe des Anbauteils (Schwerpunkt maßgebend). $c_A$ ist der aerodynamische Kraftbeiwert. Dieser wird für Anbauteile mit $c_A$= 2,0 berücksichtigt. Er wird abhängig von der aerodynamischen Form des Anbauteils berücksichtigt. A ist die Lasteinzugsfläche. Folgende Querschnittsformen sind vorzugsweise vorgesehen:
Wind auf vereiste Leiterseile + Wind auf Mast und Anbauteile:
Bei Wind auf vereiste Seile wird die vergrößerte Querschnittsfläche der Seile berücksichtigt. Der Geschwindigkeitsdruck wird gleichzeitig abgemindert, so zum Beispiel auf 0,7q.

Montagelast (Mannlast);

Es wird davon ausgegangen, dass ein Mann inklusive Ausrüstung mit einem Gewicht von 100 kg den Mast besteigt. Die Ausmitte ist 0,3-0,5 m.

Nachfolgend wird eine Verschiebung bzw. Auslenkung des betrachteten Mastes infolge einer Horizontallast dargestellt.

Die Horizontallasten ergeben sich bei Freileitungsmasten im Wesentlichen aus den Windlasten auf die Leiterseile. Das nachfolgende Schema zeigt die Berechnung der Auslenkungen infolge Windlast auf die Leiterseile. Dabei werden die Anteile infolge Mastbiegung und Verdrehung separat ermittelt.

Figur 11 zeigt schematisch das statische System zur Berechnung der Kopfverformung bei Ansatz einer Horizontallast in einer bestimmten Höhe $h_1$ (nur Biegeanteil). Das statische Berechnungsverfahren zur Ermittlung der Auslenkung am Mastkopf basiert auf dem Prinzip der "virtuellen Kräfte".

$$\begin{aligned}
\delta_{Biegung} &= \int_0^{h_1} \frac{M(z)m(z)}{EI(z)} dz \\
&= \int_0^{h_1} \frac{pz(H-h_1+z)}{E\frac{\pi}{64}[d_o-\alpha(H-h_1+z)]^4} dz \\
&= \frac{64p}{E\pi} \int_{d_o-\alpha(H-h_1)}^{d_u} \frac{(\frac{d_o-x}{\alpha}-H+h_1)\frac{d_o-x}{\alpha}}{x^4} \frac{-dx}{\alpha} \\
&= -\frac{64}{E\pi\alpha^3} \int_{d_o-\alpha(H-h_1)}^{d_u} \frac{(d_o-x-H\alpha+h_1)(d_o-x)}{x^4} dx \\
&= \frac{64}{E\pi\alpha^3}[(d_o{}^2-Hd_o\alpha+h_1d_o\alpha)\frac{1}{3x^3}+(-2d_o+H\alpha-h_1\alpha)\frac{1}{2x^2}-\frac{1}{x}]_{d_o-\alpha(H-h_1)}^{d_u}
\end{aligned}$$

$$\delta_{Rotation} = \frac{M}{C_\varphi}H = \frac{ph_1H}{C_\varphi} = \frac{ph_1H}{C_{\varphi,B}H^2} = \frac{ph_1}{C_{\varphi,B}H}$$

$$d_o - \alpha(H-h_1+z) = x$$

$$dz = \frac{-dx}{\alpha}$$

$$z = \frac{d_o - x}{\alpha} - H + h_1$$

In gleicher Weise werden die Windlasten auf den Mast selbst oder die Windlasten auf weitere Anbauteile (z.B. Verkehrszeichen) berücksichtigt. Die Berechnung ist also allgemeingültig. Sie kann in dieser Form insbesondere auch für alle Masten ohne Leiterseile verwendet werden.

Nachfolgend wird die Berechnung der Verschiebung bzw. Auslenkung des betrachteten Mastes infolge einer Vertikallast erläutert. Die Vertikallasten ergeben sich aus Mannlasten und aus weiteren Montagelasten. Die Berechnung der Auslenkungen wird nachfolgend dargestellt. Dabei werden wieder der Anteil aus Mastbiegung und Mastverdrehung separat ermittelt.

Figur 12 zeigt schematisch das statische System zur Berechnung der Kopfverformung bei Ansatz einer Vertikallast mit einer Ausmitte hv. Diese Vertikallast bewirkt ein Moment Mv, welches am Mastkopf zu einer Horizontalauslenkung führt. Das statische Berechnungsverfahren zur Ermittlung der Auslenkung am Mastkopf basiert auf dem Prinzip der "virtuellen Kräfte".

$$\begin{aligned}
\delta_{Biegung} &= \int_0^{h_1} \frac{M_V z}{EI(z)} dz \\
&= \int_0^{h_2} \frac{p_V h_V z}{E \frac{\pi}{64}(d_o - \alpha z)^4} dz \\
&= \frac{64 M_V}{E\pi} \int_{d_o}^{d_u} \frac{z}{(d_o - \alpha z)^4} \frac{-dx}{\alpha} \\
&= -\frac{64 M_V}{E\pi\alpha^2} \left[ -\frac{1}{2x} + \frac{d_o}{3x^3} \right]_{d_o}^{d_u}
\end{aligned}$$

$$\delta_{Rotation} = \frac{M_V}{C_\varphi} H = \frac{p_V h_V H}{C_\varphi} = \frac{p_V h_V H}{C_{\varphi,B} H^2} = \frac{p_V h_V}{C_{\varphi,B} H}$$

$$d_o - \alpha z = x$$

$$dz = \frac{-dx}{\alpha}$$

$$z = \frac{d_o - x}{\alpha}$$

Es werden nachfolgend zwei Maste untersucht und zwar einmal mit einem Hohlquerschnitt und einmal mit einem Vollquerschnitt. Die Ergebnisse werden mit den Ergebnissen eines numerischen Modells auf Basis der Finiten Elemente verglichen.

1. Stahlmast mit Kreisringquerschnitt

Der Stahlmast ist 4,48 m hoch und hat eine Wandstärke von 2,3 mm (0). Die Material- und Masteigenschaften sind in den nachfolgenden beiden Tabellen "Materialeigenschaften" bzw. "Masteigenschaften" angegeben. Bei der numerischen Simulation mit dem kommerziell erhältlichen SAP2000 Programm wird außerdem eine Drehfedersteifigkeit vorgegeben. Die mit dem kommerziell erhältlichen SAP2000 Programm berechnete erste Eigenfrequenz des Systems wird als Eingabe für die dargestellten erfindungsgemäßen Berechnungen bzw. numerischen Ermittlungen benutzt. Figur 13 skizziert die Geometrie des betrachteten Stahlmastes mit Kreisringquerschnitt.

Materialeigenschaften:

| Dichte [to/$m^3$] | E-Moduli [kN/$m^2$] |
|---|---|
| 7,846 | $2{,}1 \cdot 10^8$ |

Masteigenschaften:

| Frequenz [Hz] | Masse [to] | Durchmesser [m] | Konizität [-] |
|---|---|---|---|
| 2,67 | 0,0144 | 0,0603 | 0,0 |

In einer Höhe von 3,48 m wird eine Horizontallast eingeleitet, und es wird in dieser Höhe die Auslenkung berechnet. Die Berechnung der Auslenkung erfolgt sowohl im Programm SAP2000 als auch mit einem zweiten Programm "MaSTaP", welches die zuvor beschriebenen Berechnungen durchführt. 0 zeigt einen Vergleich der Ergebnisse. Dabei sind im zweiten Programm zwei verschiedene Schwingungsformen für den Biegeanteil angesetzt worden (parabelförmig und sinusförmig).

Die folgende Tabelle zeigt einen Vergleich der Ergebnisse:

| | Horizontalverschiebung [m] | Drehfedersteifigkeit [kN/m] | Frequenz mit voller Einspannung [Hz] |
|---|---|---|---|
| SAP2000 | 0,0315 | 100,00 | 3,1 |
| MaSTaP* | 0.0334 | 80,437 | 3,2 |
| Abweichung | 5,7% | 19,5% | 3,1% |
| MaSTaP** | 0,0362 | 62,156 | 3,4 |
| Abweichung | 14,8% | 37,8% | 8,8% |
| *: Biegeeigenform mit Sinusansatz<br>**: Biegeeigenform mit parabolischem Ansatz | | | |

Für den hier gewählten Fall zeigen die Ergebnisse mit dem sinusförmigen Ansatz eine bessere Übereinstimmung mit dem theoretischen Ergebnis (SAP2000). Die Abweichung bei der für die Bewertung maßgebenden Horizontalauslenkung beträgt lediglich 5,7%. Da die Verschiebung etwas überschätzt wird, liegt das Ergebnis zudem auf der sicheren Seite. Das Ergebnis zeigt noch einmal den Einfluss der angesetzten Schwingungsform auf das Ergebnis. Stimmt die Schwingungsform im Programm, welches "MaSTaP" genannt wurde, mit der tatsächlichen Schwingungsform überein, so liegt eine nahezu 100%-ige Übereinstimmung vor. Aus diesem Grund wird die Schwingungsform des Biegeanteils vorteilhaft nicht vorgegeben, sondern jeweils spezifisch, abhängig von den Mastkenngrößen (Geometrie, Querschnittswerte, Materialeigenschaften, Zusatzmassen etc.) berechnet.

Die nachfolgende Tabelle zeigt weitere Ergebnisse aus dem MaSTap Programm. Es werden die Steifigkeitsanteile für die Biegung und die Rotation, die Gesamtsteifigkeit für das generalisierte System am Mastkopf sowie die Verformungsanteile angegeben.

| | Steifigkeit infolge Biegung [kN/m] | Steifigkeit infolge Rotation* [kN/m] | Gesamte Steifigkeit [kN/m] | Def_bieg Höhe zp [m] | Def_Rot Höhe zp [m] | gen_ masse [to] |
|---|---|---|---|---|---|---|
| 1 | 1,3233 | 4,1929 | 1,0059 | 0,0239 | 0,0094 | 0,0036 |
| 2 | 1,3233 | 3,2399 | 0,93957 | 0,0239 | 0,0122 | 0,0033 |
| [1]: Biegeeigenform mit Sinusansatz<br>[2]: Biegeeigenform mit parabolischem Ansatz<br>*: Äquivalente Steifigkeit in Höhe H infolge der elastischen Einspannung. | | | | | | |

Die Auslenkung ergibt sich für den Ansatz einer sinusförmigen Schwingungsform in Höhe H zu 72% aus Biegung und 28% aus Rotation.

Es wird nachfolgend eine ähnliche Vergleichsrechnung für einen Mast mit einem Vollquerschnitt durchgeführt (siehe Figur 14, die die Geometrie eines Stahlmastes mit Vollquerschnitt darstellt). Der Stahlmast ist wieder 4,48 m hoch und hat einen Durchmesser von 60,3 mm. Die Material- und Masteigenschaften sind in den nachfolgenden beiden Tabellen "Materialeigenschaften" bzw. "Masteigenschaften" angegeben. Bei der numerischen Simulation mit dem SAP2000 Programm wird wieder eine Drehfedersteifigkeit vorgegeben. Die mit dem Programm SAP2000 berechnete erste Eigenfrequenz des Systems wird als Eingabe für das MaSTaP Programm benutzt.

Materialeigenschaften:

| Dichte [to/m$^3$] | E-Moduli [kN/m$^2$] |
|---|---|
| 7,846 | $2{,}1*10^8$ |

Masteigenschaften

| Frequenz [Hz] | Masse [to] | Durchmesser [m] | Konizität [-] |
|---|---|---|---|
| 1,51 | 0,098 | 0,0603 | 0,0 |

In einer Höhe von 3,48 m wird eine Horizontallast eingeleitet, und es wird in dieser Höhe die Auslenkung berechnet. Die Berechnung der Auslenkung erfolgt sowohl im Programm SAP2000 als auch mit dem Programm MaSTaP. Die nachfolgende Tabelle zeigt einen Vergleich der Ergebnisse, Dabei sind im Programm MaSTaP wieder zwei verschiedene Schwingungsformen für den Biegeanteil angesetzt worden (parabelförmig und sinusförmig).

Vergleich der Ergebnisse:

| | Horizontal Verschiebung [m] | Drehfedersteifigkeit [kN/m] | Frequenz mit voller Einspannung [Hz] |
|---|---|---|---|
| SAP2000 | 0,0143 | 100,00 | 2,26 |
| MaSTaP* | 0,0147 | 92,756 | 2,35 |
| Abweichung | 2,7% | 7,2% | 3,8% |
| MaSTaP** | 0,0155 | 84,485 | 2,51 |
| Abweichung | 7,7% | 15,5% | 10% |
| *: Biegeeigenform mit Sinusansatz<br>**: Blegeeigenform mit parabolischem Ansatz | | | |

Auch für den hier gewählten Fall zeigen die Ergebnisse mit dem sinusförmigen Ansatz eine bessere Übereinstimmung mit dem theoretischen Ergebnis (SAP2000). Die Abweichung bei der für die Bewertung maßgebenden Horizontalauslenkung beträgt lediglich 2,7%. Da die Auslenkung auch hier etwas überschätzt wird, liegt das Ergebnis zudem auf der sicheren Seite.

Die nachfolgende Tabelle zeigt die weiteren Ergebnisse aus dem MaSTap Programm. Es werden die Steifigkeitsanteile für die Biegung und die Rotation, die Gesamtsteifigkeit für das generalisierte System am Mastkopf sowie die Verformungsanteile angegeben.

Die Ergebnisse aus dem MaSTaP Programm:

| | Steifigkeit infolge Biegung [kN/m] | Steifigkeit infolge Rotation* [kN/m] | Gesamte Steifigkeit [kN/m] | Def_bieg Höhe zp [m] | Def_Rot Höhe zp [m] | gen_ masse [to] |
|---|---|---|---|---|---|---|
| 1 | 4,8658 | 4,8352 | 2,4252 | 0,0065 | 0,0082 | 0,0269 |
| 2 | 4,8658 | 4,4039 | 2,3117 | 0,0065 | 0,009 | 0,0257 |
| 1: Biegeeigenform mit Sinusansatz<br>2: Biegeeigenform mit parabolischem Ansatz<br>*: Äquivalente Steifigkeit in Höhe H infolge der elastischen Einspannung. | | | | | | |

Die Auslenkung ergibt sich für den Ansatz einer sinusförmigen Schwingungsform in Höhe H zu 44% aus Biegung und 56% aus Rotation.

Zur weiteren Validierung wurden Kraft-Weg Messungen an ausgewählten Masten durchgeführt. Hierzu wurde in einer bestimmten Höhe eine definierte horizontal wirkende Kraft in den Mast eingeleitet. Die zugehörige Auslenkung in Höhe der Last wurde gemessen.

Für den gleichen Mast wurden dann Frequenzmessungen durchgeführt und die Auslenkung für die gleiche Last mit Hilfe des erstellten Programms MaSTaP berechnet.

Die Übereinstimmung zwischen den direkt gemessenen Auslenkungen und den aus der Frequenzmessung bestimmten Auslenkungen ist gut. Die Abweichungen liegen bei maximal 10%, obwohl die Messungen an Holzmasten durchgeführt wurden, bei denen naturgemäß eine große Streuung der Materialkennwerte vorliegt.

Die nachfolgenden Tabellen zeigen eine Gegenüberstellung der gemessenen Auslenkungen infolge einer Einzellast mit den rechnerisch ermittelten Auslenkungen, die mit den aus der Frequenzmessung ermittelten Systemsteifigkeiten ermittelt wurden.

| Material | Querschnitt | Umfang | Außendurchmesser | Wandstärke | Feuchte | Mastlaenge | HoeheEOK | f gemessen | zp Höhe Lasteinleitung | Last | Last | Horizontalverschiebung gemessen | Gesamtverformung an Lasteinleitung, gerechnet | Abweichung |
|---|---|---|---|---|---|---|---|---|---|---|---|---|---|---|
| | | in mm | in mm | in mm | in % | m | m | Hz | m | in kg | N | in mm | in mm | |
| Kiefer | Kreisvollquer schnitt | 310,0 | 98,7 | | 4,5 | 4,000 | 3,200 | 5,763 | 3,015 | 6,5 | 63,8 | 18,0 | 19,2 | **1,07** |
| Kiefer | Kreisvollquer schnitt | 310,0 | 98,7 | | 4,5 | 4,000 | 3,200 | 5,763 | 3,015 | 13,0 | 127,5 | 34,0 | 36,9 | **1,09** |
| Kiefer | Kreisvollquer schnitt | 310,0 | 98,7 | | 4,5 | 4,000 | 3,200 | 5,763 | 3,015 | 19,5 | 191,3 | 52,0 | 56,1 | **1,08** |
| Stahl | Kreisringquer schnitt | 190,0 | 60,5 | 2,3 | 0 | 5,060 | 4,380 | 2,67 | 3,48 | 6,5 | 63,8 | 32,0 | 33,2 | **1,04** |
| Stahl | Kreisringquer schnitt | 191,0 | 60,8 | 2,3 | 0 | 5,060 | 4,380 | 2,67 | 3,48 | 13,0 | 127,5 | 61,0 | 63,1 | **1,03** |

Die Übereinstimmung der Ergebnisse ist gut. Die maximalen Abweichungen liegen unter 10%. Bei Stahlmasten sind die Abweichungen deutlich kleiner, was auf das homogenere Material zurückzuführen ist.

Diese Ergebnisse wurden noch mit einer vorgegebenen Schwingungsform ermittelt. Test mit einer geänderten Programmversion, die spezifische Schwingungsformen verwendet, haben zu einer weiteren Verbesserung der Übereinstimmung geführt.

Nachfolgend werden die Ergebnisse für zwei tatsächlich gemessene und bewertete Masten vorgestellt. Die Figuren 15 und 16 zeigen die gemessenen Frequenzspektren der Beschleunigungen. Figur 15 zeigt das Ergebnis eines Beschleunigungsspektrums für einen Mast 1 mit einer gemessenen Eigenfrequenz fe=1,368 Hz. Figur 16 zeigt das Ergebnis eines Beschleunigungsspektrums für einen Mast 2 mit einer gemessenen Eigenfrequenz fe=1,953 Hz. Die Peaks bei der ersten- und zweiten Eigenfrequenz sind deutlich zu erkennen.

Der Mast 2 wird einmal ohne und einmal mit Seilen bewertet. Die Bewertung ohne Seile zeigt, dass die Seile einen deutlichen Einfluss auf die korrekte Bewertung haben. In diesem Fall ist der Mast 2 mit Seilen in Klasse 2 einzustufen, während er ohne Seile in Klasse 1 eingestuft worden wäre. Da er aber mit Seilen gemessen wurde, ist die Klasse 2 die richtige Einstufung. Die Seile bewirken eine Vergrößerung der Steifigkeit, Da aber gleichzeitig die anzusetzenden Windlasten deutlich steigen (wg. der Windlast auf die Seile), tritt insgesamt eine größere Verformung auf, die zu einer schlechteren Klasse führt. Der Vergleich mit den Bewertungen, die auf einer rein visuellen Einschätzung des Mastzustandes beruhen, zeigt eine gute Übereinstimmung.

| | | Mast 1 | Mast 2 | Mast 2 |
|---|---|---|---|---|
| Spannung | (NS=Niederspannung) | NS | NS | NS |
| Beseilung, Querschnitt | in mm² | 35 | 35 | 35 |
| Seilgewicht (Dichte) | kg/m³ | 3560 | 3560 | 3560 |
| Durchhang Links | in m | 0,65 | 0 | 0,55 |
| Durchhang Rechts | in m | 0,65 | 0 | 0,55 |
| Holztyp | (Kl=Kiefer) | Kl | Kl | Kl |
| Masttyp | (T=Tragmast | T | T | T |
| Mastlänge (Nennlänge) | in m | 10,00 | 10,00 | 10,00 |
| Umfang unten | in cm | 67 | 72 | 72 |
| Durchmesser unten | in m | 0,214 | 0,230 | 0,230 |
| Durchmesser oben | in m | 0,181 | 0,197 | 0,197 |
| Baujahr | | 1977 | 1979 | 1979 |
| Höhe H GOK | in m | 8,40 | 8,25 | 8,25 |
| Feldlänge links LL | in m | 45 | 39 | 39 |
| Feldlänge rechts LR | in m | 45 | 39 | 39 |
| Mastbild | (1=3 Seile) | 1 | 0 | 1 |
| Höhe unterste Phase über GOK | in m | 6,9 | 0 | 7,0 |
| Bemerkungen | | | Mast ohne Seile | |
| Temperatur | in °C | 13,5 | 13,5 | 13,5 |
| Feuchte am Fuss | in % | 17,3 | 16,4 | 16,4 |
| Feuchte am Schaft | in % | 13,1 | 13,9 | 13,9 |
| Eigenfrequenz gemessen | in Hz | 1,368 | 1,953 | 1,953 |
| Eigenfrequenz für Volleinspannung (unkorrigiert) | in Hz | 1,850 | 2,431 | 2,431 |
| E-Modul (Ausgangswert) | in kN/m² | 1,10E+07 | 1,10E+07 | 1,10E+07 |
| korrigierter E-Modul (inkl. Feuchteeinfluß und Altersfaktor) | in kN/m² | 1,34E+07 | 1,32E+07 | 1,32E+07 |
| Dichte (Ausgangswert) | in t/m³ | 0,520 | 0,520 | 0,520 |
| Dichte (inkl. Feuchtekorektur) | in t/m³ | 0,525 | 0,529 | 0,529 |
| Altersfaktor | | 1,257 | 1,249 | 1,249 |
| Eigenfrequenz für Volleinspannung (korrigiert) | in Hz | 2,072 | 2,717 | 2,717 |
| Biegesteifigkeit (korrigiert) | in kN/m | 6,297 | 8,854 | 8,854 |
| Gesamtsteifigkeit | in kN/m | 3,288 | 5,384 | 7,201 |
| Windzone | | 2 | 2 | 2 |
| Windlast (Summe auf Gesamtsystem) | in kN | 2,31 | 1,44 | 2,36 |
| Kopfpunktverschiebung max y infolge Windlast | in m | 0,396 | 0,099 | 0,194 |
| bezog. Verschiebung max y/H GOK | | **4,72%** | **1,20%** | **2,35%** |
| Klasse 1 zul max y/H GOK | | 1,50% | 1,50% | 1,50% |
| Klasse 2 zul max y/H GOK | | 3,00% | 3,00% | 3,00% |
| Klasse 3 zul max y/H GOK | | 5,00% | 5,00% | 5,00% |
| MaSTaP Bewertung | | **3** | **1** | **2** |
| Fusszustand | visuelle Bewertung | 3 | 2 | 2 |
| Schaftzustand | | 3 | 2 | 2 |
| Zopfzustand | | 3 | 2 | 2 |
| Mastzustand | | 3 | 2 | 2 |

Basis des erfindungsgemäßen Verfahrens ist die Tatsache, dass in den Eigenfrequenzen, die durch Schwingungsmessungen bestimmt werden können, Informationen zur Systemsteifigkeit und zur mitschwingenden Masse enthalten sind, Die mitschwingende Masse der Systeme wird bestimmt, so dass als einzige Unbekannte die Systemsteifigkeit verbleibt. Mit den gemessenen Eigenfrequenzen kann also auf die Systemsteifigkeit geschlossen werden. Mit Hilfe der Messergebnisse wird ein numerisches System des tatsächlichen Mastes beispielsweise in einem Rechner kalibriert. Dies geschieht insbesondere durch Justierung der Steifigkeit einer virtuell angenommenen Drehfeder. Der Drehfeder werden also alle steifigkeitsmindernd wirkenden Einflüsse zugewiesen. Es spielt dabei keine Rolle, an welcher Stelle im System z, B, Schädigungen vorhanden sind. Detaillierte Vergleichsrechnungen (vereinfachtes System mit kalibrierter Drehfeder und detaillierte Systeme mit Schädigungen an verschiedenen Stellen des Mastes) haben gezeigt, dass dieses Vorgehen ausreichend genau ist, um die Kopfverschiebungen an dem so kalibrierten numerischen System zutreffend zu berechnen. Für die Messungen werden die Masten beispielsweise manuell angeregt, und es werden die Systemantworten mit geeigneten Sensoren gemessen. Die Auswertung dieser Daten kann nach Eingabe aller notwendigen Parameter (z.B. Geometrie des Mastes, Material etc.) automatisch in einem Rechner durch eine entsprechende Software durchgeführt werden. Eine solche Software berechnet die maximalen Verschiebungen bzw. Auslenkungen am Mastkopf für verschiedene Lastfälle Eine solche Verschiebung wird dann zur Bewertung herangezogen. Es werden bei Holzmasten mehrere Klassen, vorzugsweise 4 Klassen unterschieden.

Das Verfahren ist für eine Vielzahl von Masttypen und Mastmaterialien geeignet.

Literatur

[1] Petersen, Ch. : Dynamik der Baukonstruktionen; Neubiberg, 1996

[2] EN 40, Lichtmaste, Teile 3.1-3.3, DIN, 2005

[3] VDE 0210, Freileitungen über AC-45 kV, Teile 1-12, 2007

[4] DIN 1055-4, Einwirkungen auf Tragwerke- Teil 4 Windlasten, DIN 2005

[5] prEN 14229:2007, Structural timber - Wood Poles for overhead lines, European Standard, Technical Committee CEN/TC 124, 2007

[6] Neuhaus Helmut, Lehrbuch des Ingenieurholzbaus, B. G. Teubner 1994

[7] Neuhaus, H.: Elastizitätszahlen von Fichtenholz in Abhängigkeit von der Holzfeuchtigkeit, Diss., in: technisch-wissenschaftliche Mitteilungen, Nr 81-8, Inst, für konstruktiven Ingenieurbau, Ruhr-Universität-Bochum, 1981

[8] Neuhaus, H.: Über das elastische Verhalten von Fichtenholz in Abhängigkeit von der Holzfeuchtigkeit, Holz als Roh- und Werkstoff 41 (1983), S. 21-25

[9] Neuhaus, H.: Über das elastische Verhalten von Holz und Kunststoffen, in: Strathmann, L. (Hrsg.), Ingenieurholzbau, Fachtagung, FB Bauingenieurwesen, Münster: FH, 1987

[10] Noack D., Geissen, A.: Einfluss von Temperatur und Feuchtigkeit auf den E-Modul des Holzes im Gefrierbereich, Holz als Werkstoff 34 (1976), S. 55-62

[11] Möhler, K.: Grundlagen der Holz-Hochbaukonstruktionen, in: Götz K.-H., Hoor D., Möhler K., Natterer J.; Holzbauatlas, München Inst. Für internationale Architektur-Dokumentation, 1980

[12] David W. Green, Jerrold E. Winandy, and David E. Kretschmann: Mechanical Properties of Wood, Forest Products Laboratory. 1999. Wood handbook-Wood as an engineering material, .Gen. Tech. Rep. FPL-GTR-113. Madison, WI: U.S. Department of Agriculture, Forest Service, Forest Products Laboratory. 463 p.

## Patentansprüche

**1.** Verfahren für die Prüfung der Standsicherheit eines stehenden Mastes, bei dem eine Eigenfrequenz des zu prüfenden Mastes durch Aufzeichnung des Schwingungsverhaltens des Mastes ermittelt wird, wobei mit Hilfe der Eigenfrequenz ein Maß für die Standsicherheit rechnerisch und/ oder numerisch ermittelt wird und anhand des ermittelten Maßes die Standsicherheit beurteilt wird,
**dadurch gekennzeichnet,**
**dass** die Auslenkung des Mastes aufgrund einer individuellen externen Belastung als besagtes Maß für die Standsicherheit mit Hilfe der ermittelten Eigenfrequenz rechnerisch und/oder numerisch ermittelt wird, wobei Systemparameter des Mastes in die Ermittlung der Auslenkung einfließen und wobei wenigstens einer der folgenden Lastfälle berücksichtigt wird:

a) Einwirkung von Wind mit standortabhängiger Referenzgeschwindigkeit auf Mast, Leiterseile und/oder Anbauteile,
b) Einwirkung von Wind mit standortabhängiger Referenzgeschwindigkeit auf vereiste Leiterseile,
c) Einwirkung einer Mannlast durch Besteigung des Mastes durch einen Mann inklusive Ausrüstung, wobei die Drehsteifigkeit des zu prüfenden Mastes ermittelt wird, um basierend auf diesem Ergebnis die Auslenkung des Mastes zu ermitteln.

2. Verfahren nach Anspruch 1, bei dem das Maß für die Standsicherheit des Mastes mit Beseilung unter Berücksichtigung von horizontalen Rückstellkräften ermittelt wird, die durch die Seile auf den Mast ausgeübt werden.

3. Verfahren nach Anspruch 1 oder 2, bei dem das Maß für die Standsicherheit unter Berücksichtigung der generalisierten Masse des Mastes ermittelt wird und zwar insbesondere gemäß

$$\Omega^2 \sim \frac{1}{\text{generalisierte Masse}}$$

mit $\Omega = 2\pi \cdot$ Eigenfrequenz $f_e$,
oder gemäß

$$\Omega^2 \sim \frac{C_{gen}}{\text{generalisierte Masse}}$$

mit $C_{gen}$ = generalisierte Steifigkeit, wobei in die generalisierte Masse die Position, Form und/oder Größe der von dem Mast zu tragenden Massen von Anbauteilen einfließen.

4. Verfahren nach einem der vorhergehenden Ansprüche, bei dem der Mast ein Holzmast ist und das Maß für die Standsicherheit unter Berücksichtigung der Materialfeuchtigkeit und/oder des Alters des Mastes und/oder der Umgebungstemperatur ermittelt wird.

5. Verfahren nach einem der vorhergehenden Ansprüche, bei dem das Maß für die Standsicherheit unter Berücksichtigung von Systemparametern des Mastes ermittelt wird.

6. Verfahren nach einem der vorhergehenden Ansprüche, bei dem das Maß für die Standsicherheit unter Berücksichtigung eines temperaturabhängigen Seildurchhangs ermittelt wird.

7. Verfahren nach einem der vorhergehenden Ansprüche, bei dem das Maß für die Standsicherheit eines Mastes mit Strom leitender Beseilung unter Berücksichtigung der elektrischen Leistung erfolgt, die durch die Beseilung geleitet wird.

8. Verfahren nach einem der vorhergehenden Ansprüche, bei dem das Maß für die Standsicherheit eines Mastes mit Strom leitender Beseilung eine Auslenkung des Mastes aufgrund einer externen Belastung ist, die senkrecht zum Verlauf eines Seils, welches vom Mast getragen wird, erfolgt.

9. Verfahren nach einem der vorhergehenden Ansprüche, bei dem für die Ermittlung einer Eigenfrequenz eines zu prüfenden Mastes zunächst solche Schwingungen aufgezeichnet werden, die aus natürlichen Umwelteinflüssen herrühren, und anschließend solche Schwingungen aufgezeichnet werden, die aus einer künstlichen Anregung resultieren.

10. Verfahren nach einem der vorhergehenden Ansprüche, bei dem für die Ermittlung einer Eigenfrequenz des zu prüfenden Mastes nur solche Schwingungen aufgezeichnet werden, die eine vorgegebene Obergrenze für eine Schwingungsfrequenz nicht überschreiten.

11. Vorrichtung mit einer so programmierten Recheneinheit, dass nach Eingabe von benötigten Eingangsinformationen und/ oder Systemparametern automatisiert ein gesuchtes Maß für die Standsicherheit nach dem Verfahren nach einem der vorhergehenden Ansprüche ermittelt wird.

12. Vorrichtung nach dem vorhergehenden Anspruch mit Beschleunigungssensoren und Mitteln zur Übergabe von durch die Sensoren ermittelte Schwingungen an die Recheneinheit.

13. Vorrichtung nach einem der beiden vorhergehenden Ansprüche mit Feuchtigkeitssensoren zur Messung der Materialfeuchte eines Mastes sowie Mitteln zur Übergabe von Materialfeuchtewerten an die Recheneinheit.

**14.** Vorrichtung nach einem der drei vorhergehenden Ansprüche mit Ausgabemitteln für die Ausgabe eines Prüfergebnisses über die Standsicherheit eines Mastes.

## Claims

**1.** Method for testing the stability of a standing mast, in which a natural frequency of the mast to be tested is determined by recording the vibrational behaviour of the mast,
wherein a measure of the stability is computationally and/or numerically determined with the aid of the natural frequency and the stability is assessed on the basis of the measure determined,
**characterized**
**in that** the deflection of the mast is computationally and/or numerically determined on the basis of an individual external loading as the said measure of the stability with the aid of the natural frequency determined, wherein system parameters of the mast are included in the determination of the deflection and wherein at least one of the following load cases is taken into consideration:

a) the effect on the mast, conductor cables and/or attached parts of wind at a location-dependent reference speed,
b) the effect on iced-over conductor cables of wind at a location-dependent reference speed,
c) the effect of the load of a man, by a man with equipment climbing onto the mast, wherein the torsional stiffness of the mast to be tested is determined in order to determine the deflection of the mast on the basis of this result.

**2.** Method according to Claim 1, in which the measure of the stability of the mast with cabling is determined while taking into consideration horizontal restoring forces that are exerted on the mast by the cables.

**3.** Method according to Claim 1 or 2, in which the measure of the stability is determined while taking into consideration the generalized mass of the mast, to be precise in particular according to

$$\Omega^2 \sim \frac{1}{\text{generalized mass}}$$

where

$$\Omega = 2\Pi \cdot \text{natural frequency } f_e,$$

or according to

$$\Omega^2 \sim \frac{C_{gen}}{\text{generalized mass}}$$

where $C_{gen}$ = generalized stiffness, wherein the position, shape and/or size of the masses of attached parts to be carried by the mast are included in the generalized mass.

**4.** Method according to one of the preceding claims, in which the mast is a wooden pole and the measure of the stability is determined while taking into consideration the moisture of the material and/or the age of the mast and/or the ambient temperature.

**5.** Method according to one of the preceding claims, in which the measure of the stability is determined while taking into consideration system parameters of the mast.

**6.** Method according to one of the preceding claims, in which the measure of the stability is determined while taking into consideration a temperature-dependent sag of the cable.

7. Method according to one of the preceding claims, in which the measure of the stability of a mast with current-conducting cabling is performed while taking into consideration the electrical power that is conducted through the cabling.

8. Method according to one of the preceding claims, in which the measure of the stability of a mast with current-conducting cabling is a deflection of the mast on the basis of an external loading, which takes place perpendicularly to the run of a cable that is carried by the mast.

9. Method according to one of the preceding claims, in which, for the determination of a natural frequency of a mast to be tested, first those vibrations that originate from natural environmental influences are recorded, and then those vibrations that result from an artificial excitation are recorded.

10. Method according to one of the preceding claims, in which only those vibrations that do not exceed a predetermined upper limit for a vibration frequency are recorded for the determination of a natural frequency of the mast to be tested.

11. Device with a computing unit programmed in such a way that, after entering required input information and/or system parameters, a measure of the stability that is sought is determined in an automated manner by the method according to one of the preceding claims.

12. Device according to the preceding claim with acceleration sensors and means for transferring vibrations determined by the sensors to the computing unit.

13. Device according to one of the two preceding claims with moisture sensors for measuring the moisture of the material of a mast and also means for transferring material moisture values to the computing unit.

14. Device according to one of the three preceding claims with output means for outputting a test result about the stability of a mast.

## Revendications

1. Procédé d'examen de la stabilité d'un mât installé verticalement, dans lequel une fréquence propre du mât à examiner est déterminée en enregistrant le comportement du mât aux vibrations, dans lequel une mesure de la stabilité est déterminée par calcul et/ou numériquement au moyen de la fréquence propre, et la stabilité est évaluée sur la base de la mesure déterminée,
**caractérisé en ce que** la flexion du mât due à une charge externe individuelle est déterminée par calcul et/ou numériquement comme étant ladite mesure de stabilité au moyen de la fréquence propre déterminée, dans lequel des paramètres système du mât sont pris en compte pour la détermination de la flexion et dans lequel au moins l'un des cas de charge suivants est pris en compte :

   a) effet d'un vent présentant une vitesse de référence en fonction de l'emplacement sur le mât, sur des câbles conducteurs et/ou sur des accessoires,
   b) effet du vent et de la vitesse de référence sur des câbles conducteurs givrés, en fonction de l'emplacement,
   c) effet d'une charge produite par un homme grimpant au mât, y compris les équipements, dans lequel la rigidité en torsion du mât à examiner est déterminée afin de déterminer la flexion du mât en fonction de ce résultat.

2. Procédé selon la revendication 1, dans lequel la mesure de la stabilité du mât muni de câbles est déterminée en tenant compte de forces de rappel horizontales exercées par les câbles sur le mât.

3. Procédé selon la revendication 1 ou 2, dans lequel la mesure de stabilité est déterminée en tenant compte de la masse généralisée du mât, en particulier conformément à

$$\Omega^2 \sim \frac{1}{\text{masse généralisée}}$$

masse généralisée

où $\Omega = 2\pi \cdot$ fréquence propre $f_e$,
ou conformément à

$$\Omega^2 \sim \frac{C_{gen}}{\text{masse généralisée}}$$

où $C_{gen}$ = rigidité généralisée, dans lequel la position, la forme et/ou la taille des masses d'accessoires devant être portés par le mât sont prises en compte dans la masse généralisée.

**4.** Procédé selon l'une des revendications précédentes, dans lequel le mât est un mât en bois et la mesure de stabilité est déterminée en tenant compte de la teneur en humidité du matériau et/ou de l'âge du mât et/ou de la température ambiante.

**5.** Procédé selon l'une des revendications précédentes dans lequel la mesure de stabilité est déterminée en tenant compte de paramètres système du mât.

**6.** Procédé selon l'une des revendications précédentes, dans lequel la mesure de stabilité est déterminée en tenant compte d'un fléchissement du câble dépendant de la température.

**7.** Procédé selon l'une des revendications précédentes, dans lequel la mesure de la stabilité d'un mât muni d'un câble conducteur de courant est déterminée en tenant compte de la puissance électrique qui est transmise par le câble.

**8.** Procédé selon l'une des revendications précédentes, dans lequel la mesure de la stabilité d'un mât muni de câbles conducteurs de courant est une flexion du mât due à une charge externe perpendiculaire au trajet d'un câble porté par le mât.

**9.** Procédé selon l'une des revendications précédentes, dans lequel, pour déterminer la fréquence propre d'un mât à examiner, on enregistre d'abord les vibrations qui sont provoquées par des effets environnementaux naturels puis les vibrations qui résultent d'une excitation artificielle.

**10.** Procédé selon l'une des revendications précédentes dans lequel, pour déterminer une fréquence propre du mât à examiner, on n'enregistre que les vibrations qui ne dépassent pas une limite supérieure déterminée pour une fréquence de vibration.

**11.** Dispositif comportant une unité de calcul programmée de telle manière que, après que les informations d'entrée et/ou les paramètres système requis ont été fournis en entrée, une mesure de stabilité recherchée soit déterminée de manière automatisée conformément au procédé selon l'une des revendications précédentes.

**12.** Dispositif selon la revendication précédente comprenant des capteurs d'accélération et des moyens destinés à transmettre à l'unité de calcul des vibrations détectées par les capteurs.

**13.** Dispositif selon l'une des deux revendications précédentes, comportant des capteurs d'humidité destinés à mesurer l'humidité du matériau d'un mât ainsi que des moyens destinés à transmettre des valeurs d'humidité du matériau à l'unité de calcul.

**14.** Dispositif selon l'une des trois revendications précédentes, comportant des moyens de sortie destinés à fournir en sortie un résultat d'examen de la stabilité d'un mât.

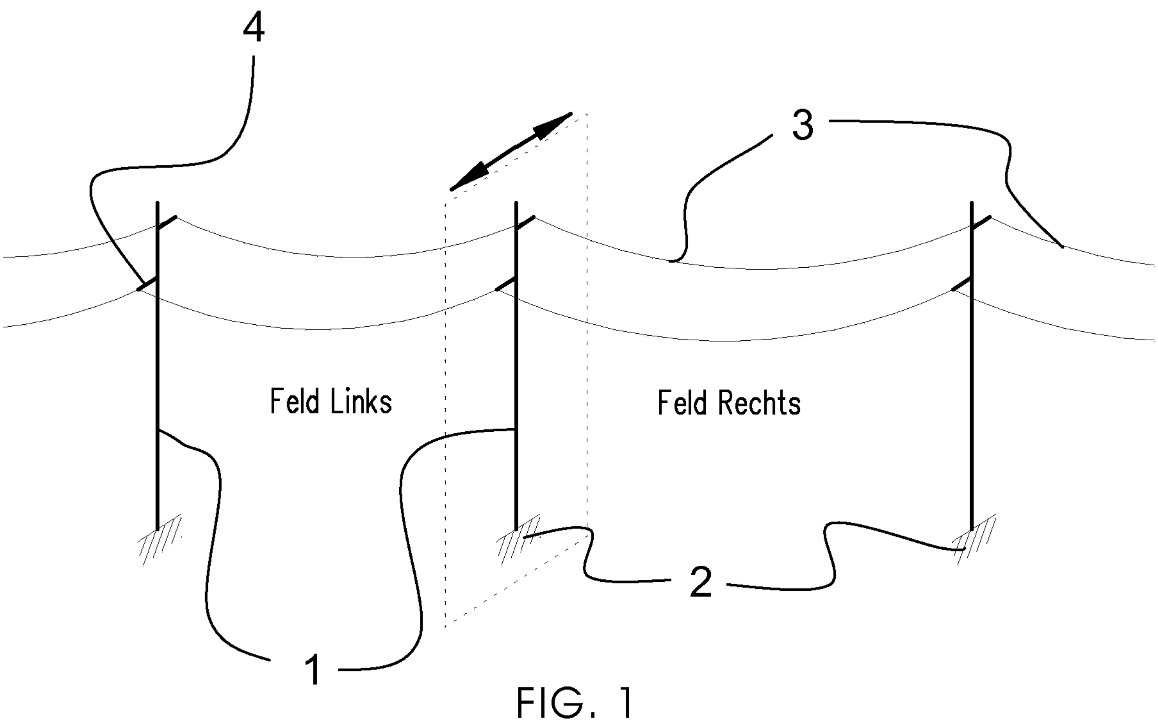


FIG. 1

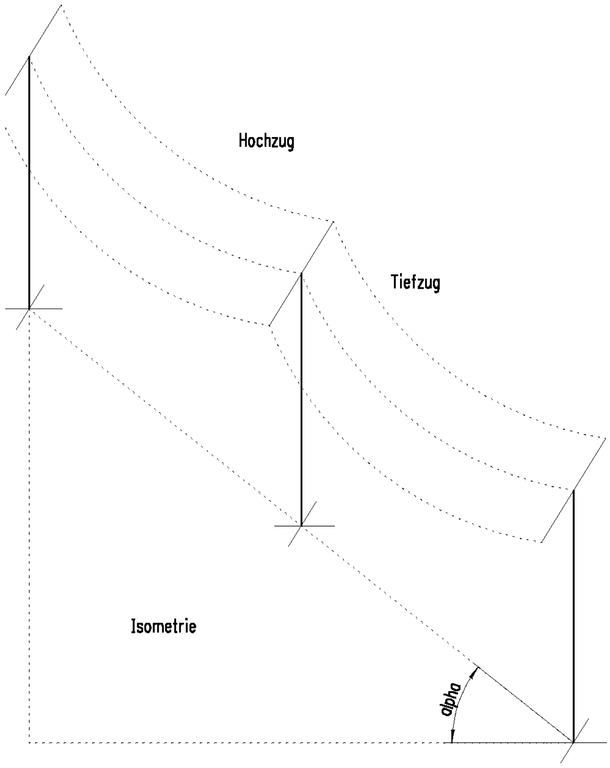
Hochzug
Tiefzug
Isometrie
alpha

Fig. 2a

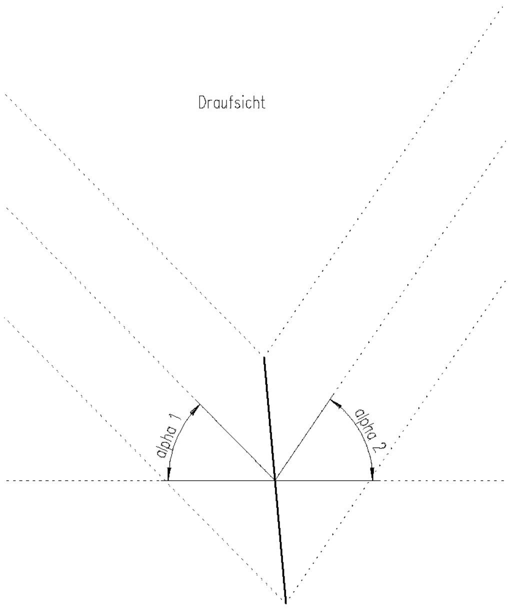
Draufsicht
alpha 1
alpha 2

Fig. 2b

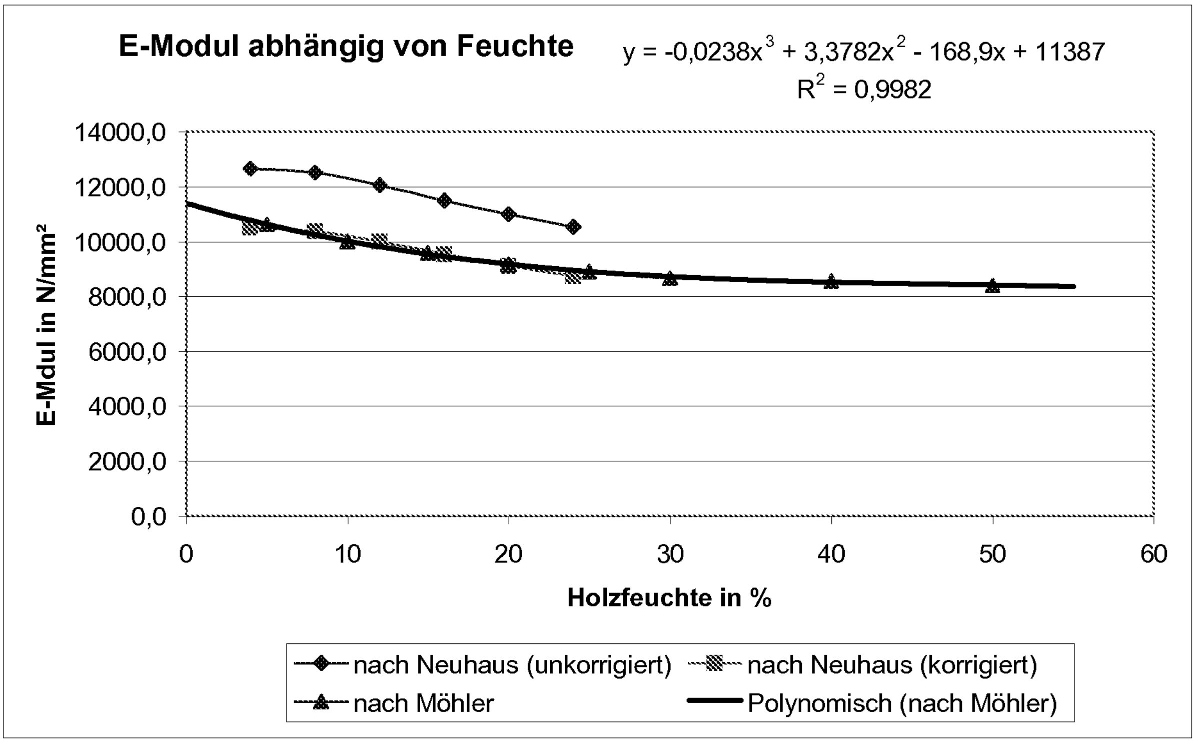
E-Modul abhängig von Feuchte
y = -0,0238x3 + 3,3782x2 - 168,9x + 11387
R2 = 0,9982
14000,0
12000,0
10000,0
8000,0
6000,0
4000,0
2000,0
0,0
E-Mdul in N/mm²
0
10
20
30
40
50
60
Holzfeuchte in %
nach Neuhaus (unkorrigiert)
nach Neuhaus (korrigiert)
nach Möhler
Polynomisch (nach Möhler)

FIG. 3

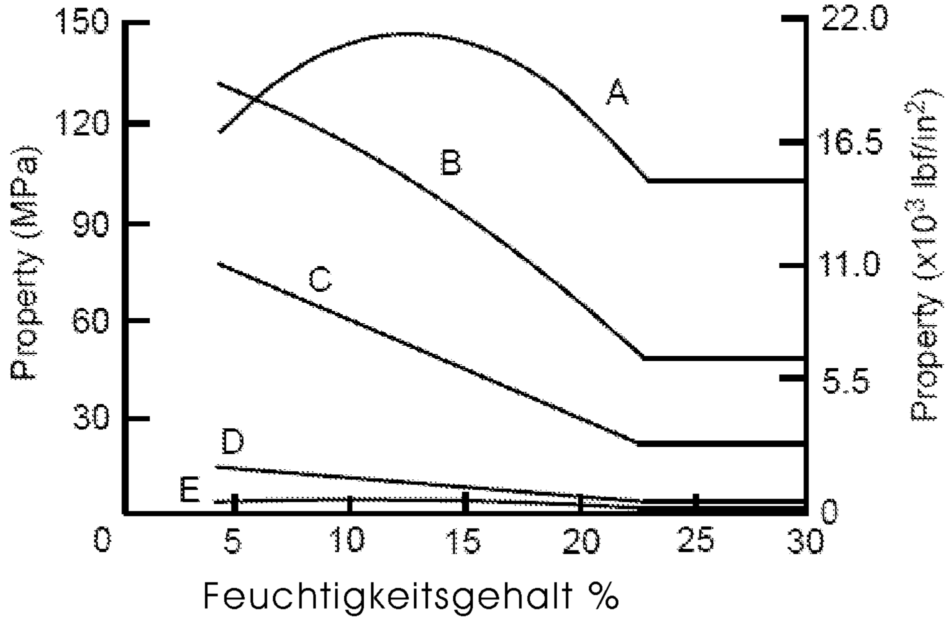
150
120
90
60
30
0
Property (MPa)
22.0
16.5
11.0
5.5
0
Property (x10³ lbf/in²)
A
B
C
D
E
5
10
15
20
25
30
Feuchtigkeitsgehalt %

FIG. 4

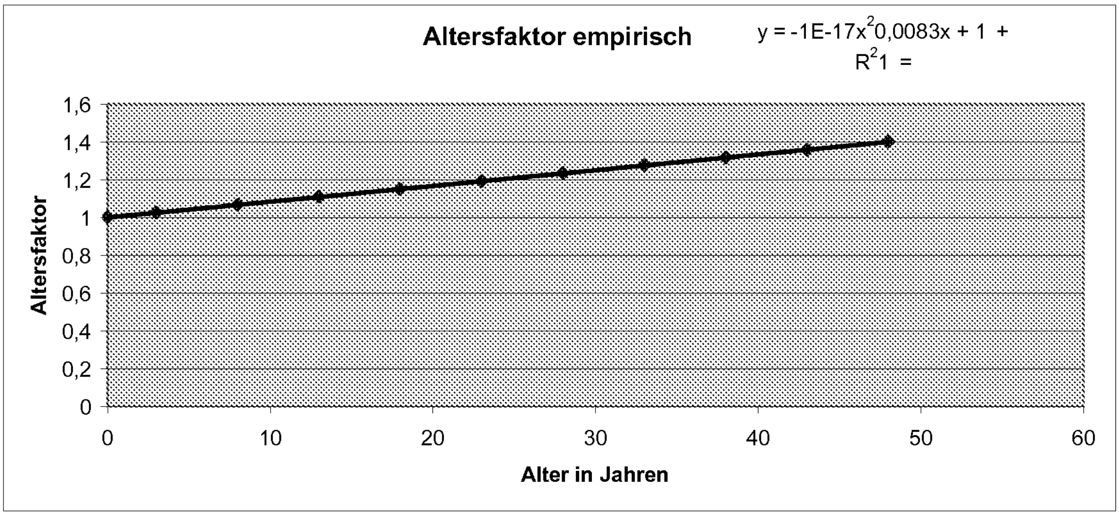
Altersfaktor empirisch
y = -1E-17x2 0,0083x + 1 +
R2 1 =
Altersfaktor
1,6
1,4
1,2
1
0,8
0,6
0,4
0,2
0
0
10
20
30
40
50
60
Alter in Jahren

FIG. 5

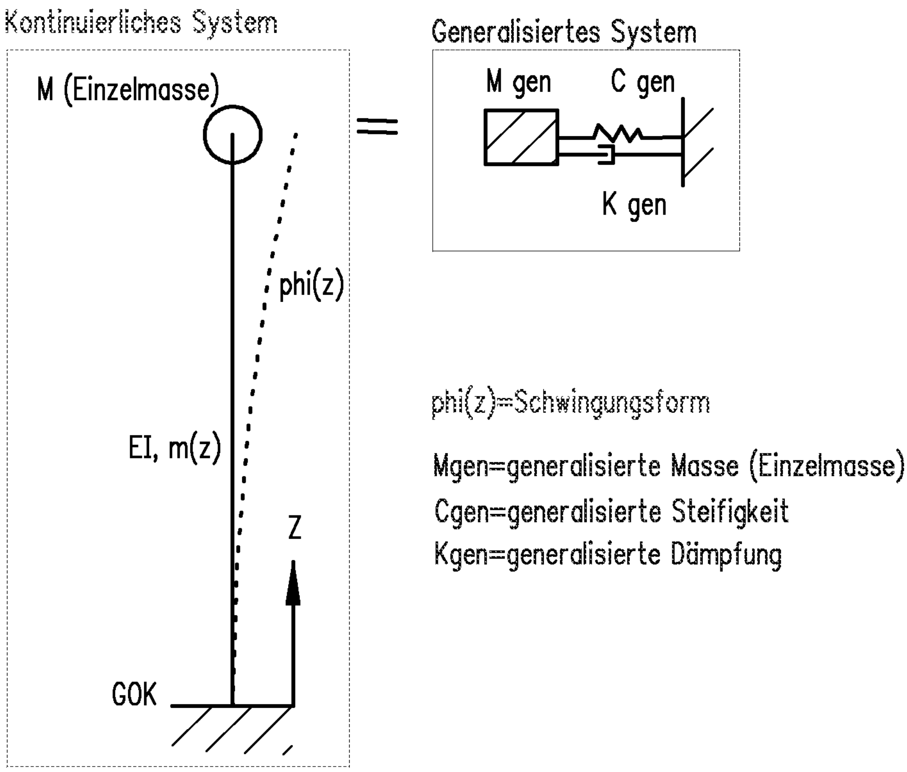
Kontinuierliches System
M (Einzelmasse)
phi(z)
EI, m(z)
Z
GOK
Generalisiertes System
M gen
C gen
K gen
phi(z)=Schwingungsform
Mgen=generalisierte Masse (Einzelmasse)
Cgen=generalisierte Steifigkeit
Kgen=generalisierte Dämpfung

FIG. 6

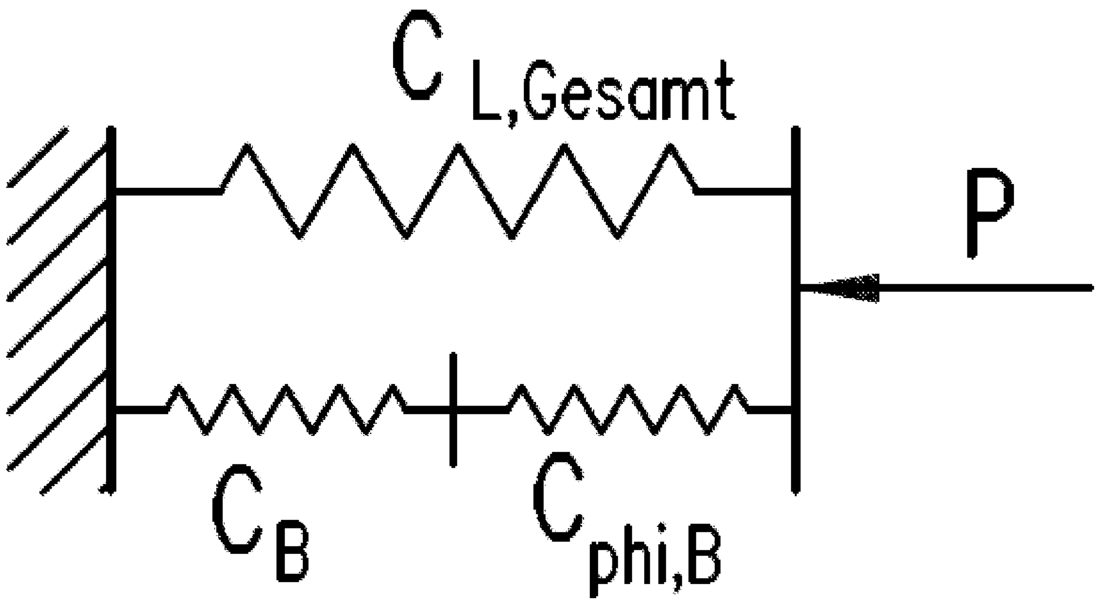


FIG. 7a

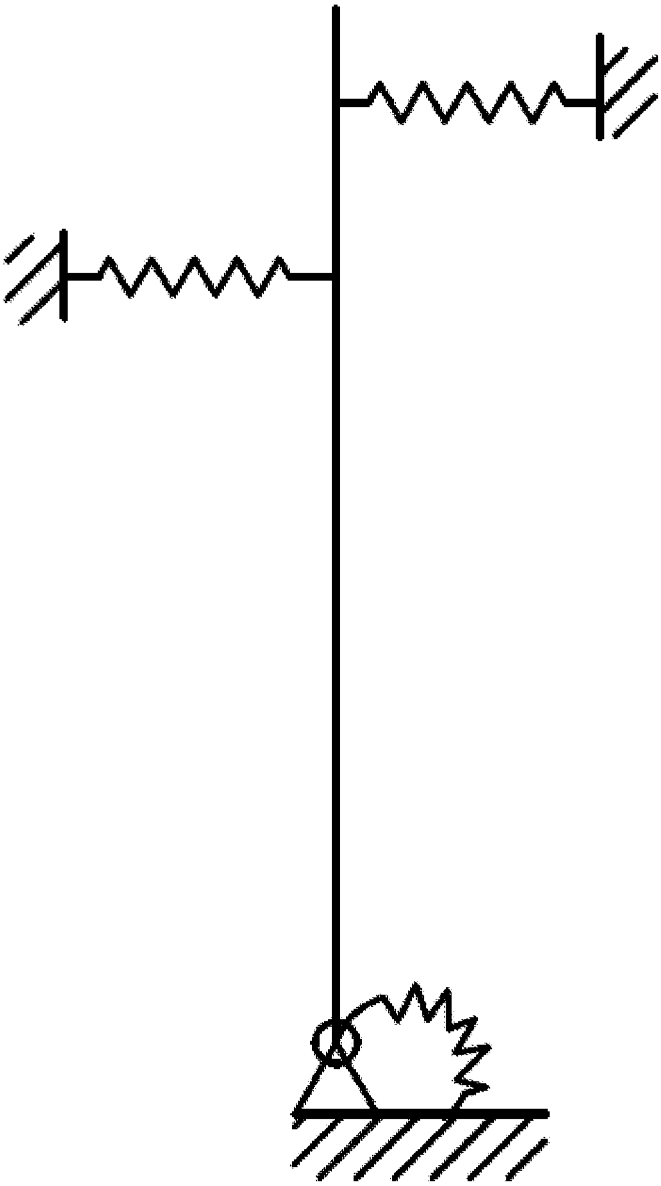

FIG. 7b

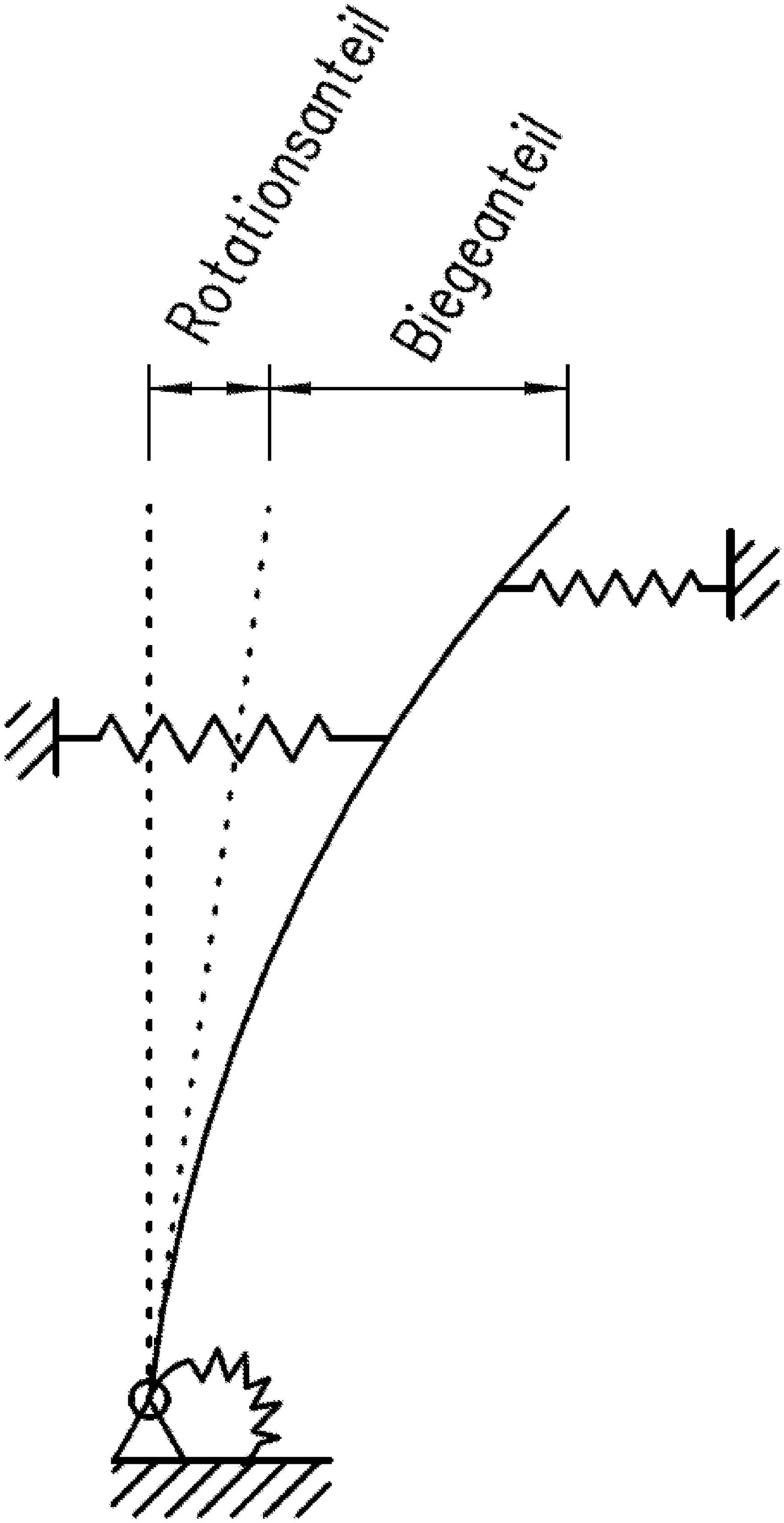


FIG. 7c

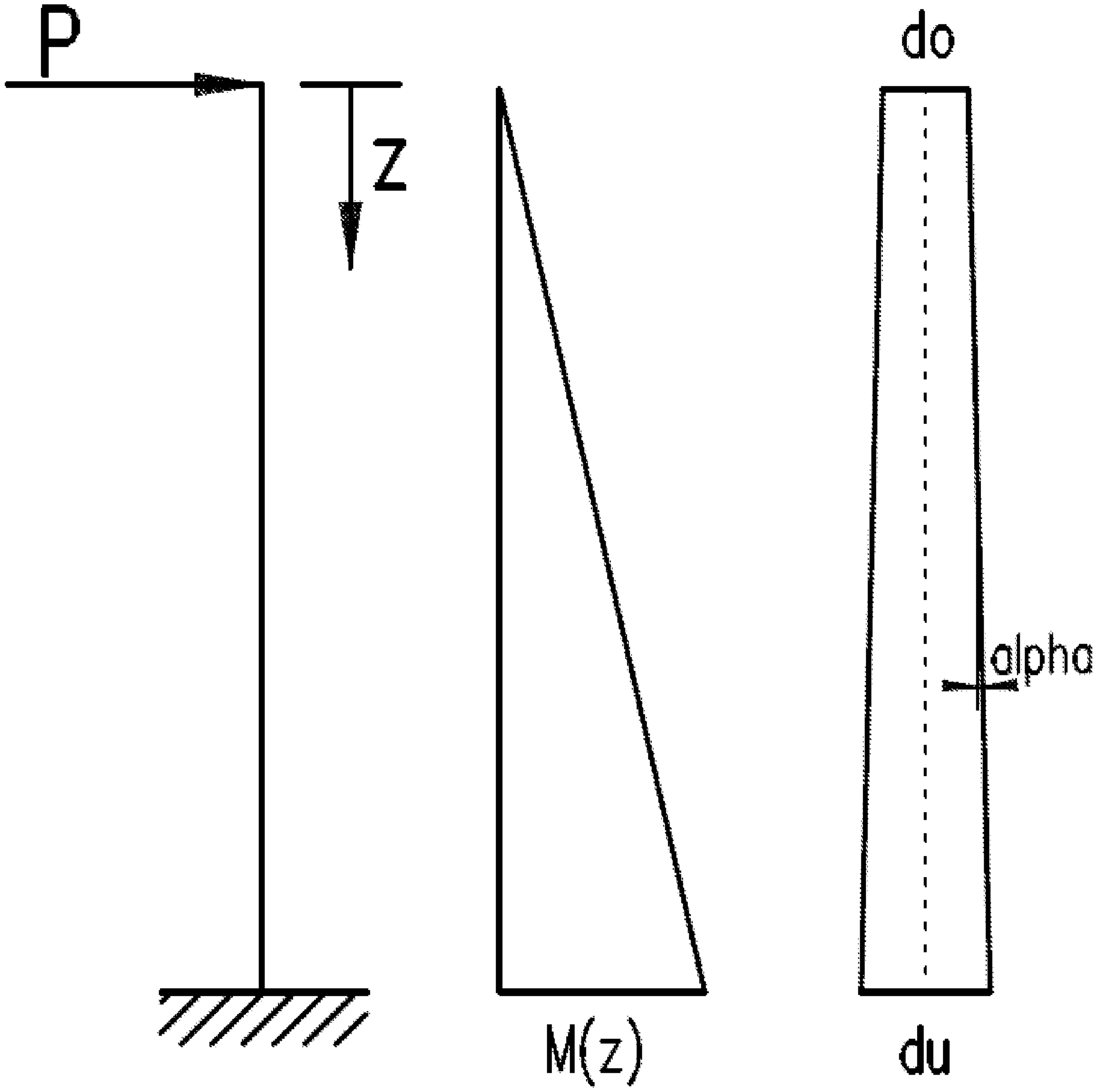


FIG. 8

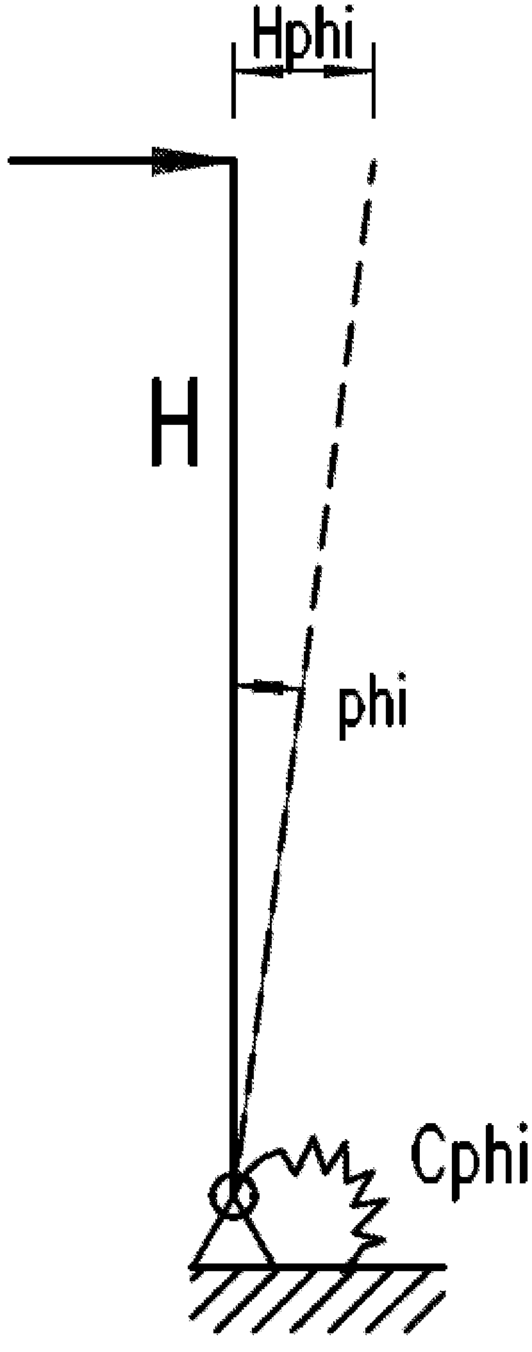


FIG. 9

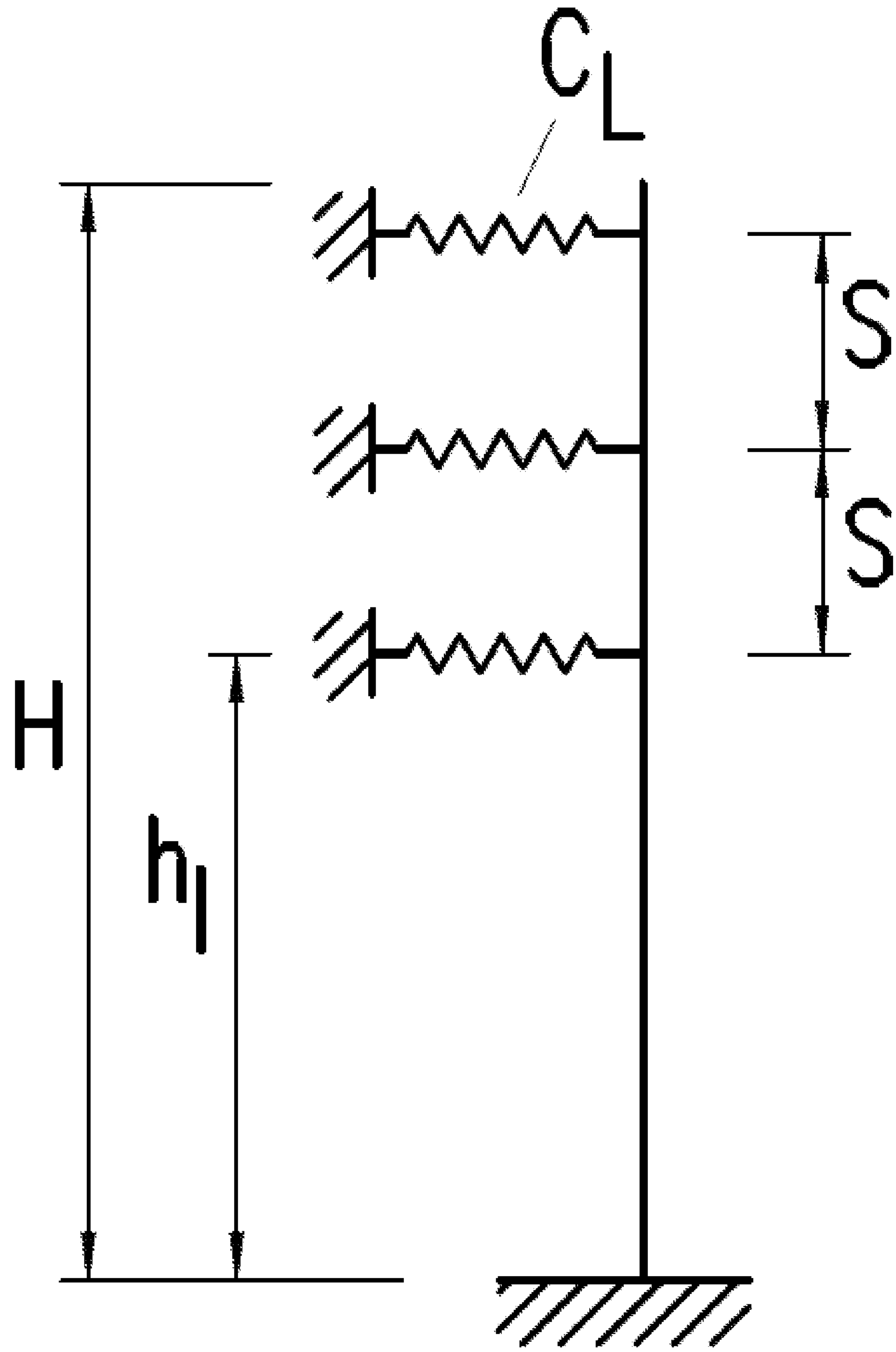


FIG. 10

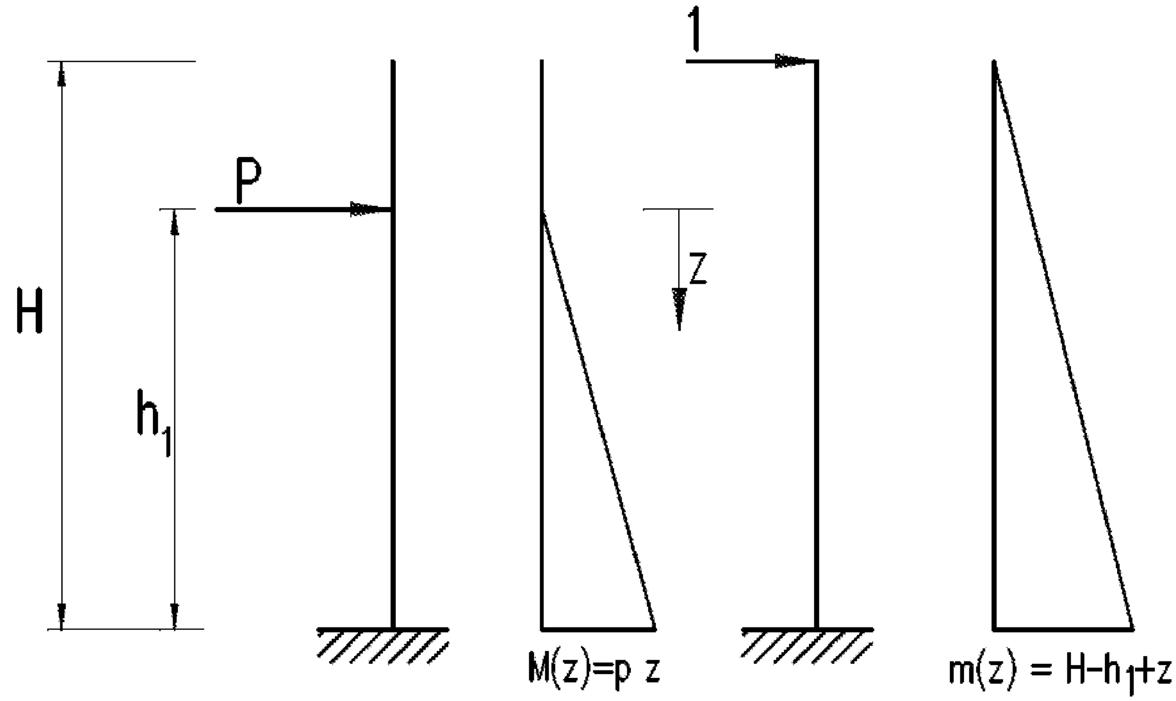


FIG. 11

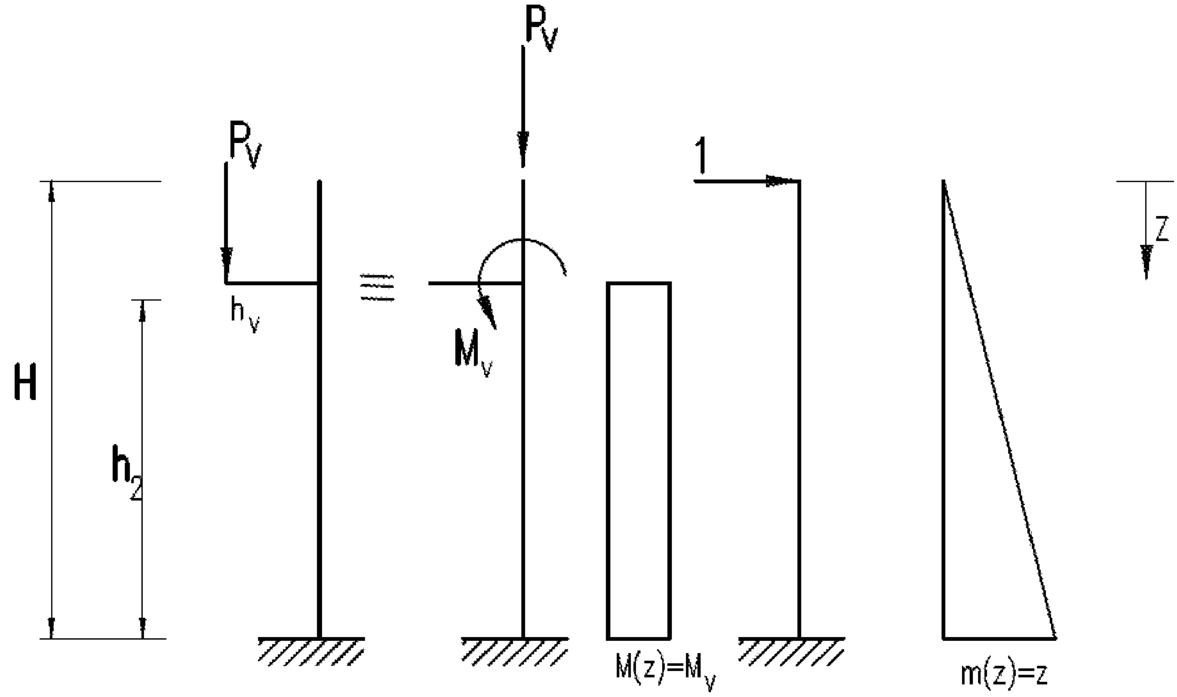


FIG. 12

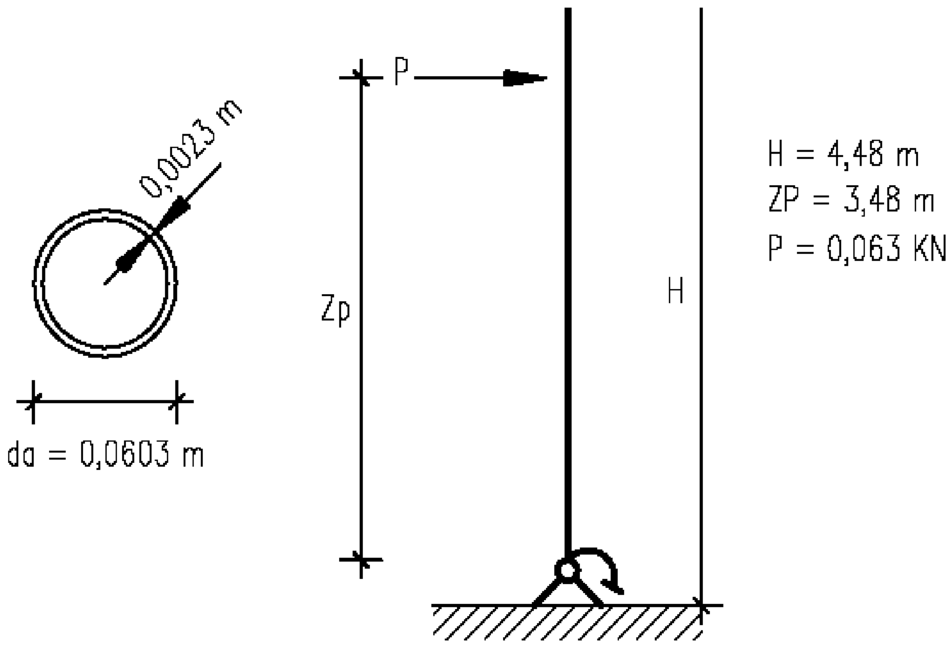


FIG. 13

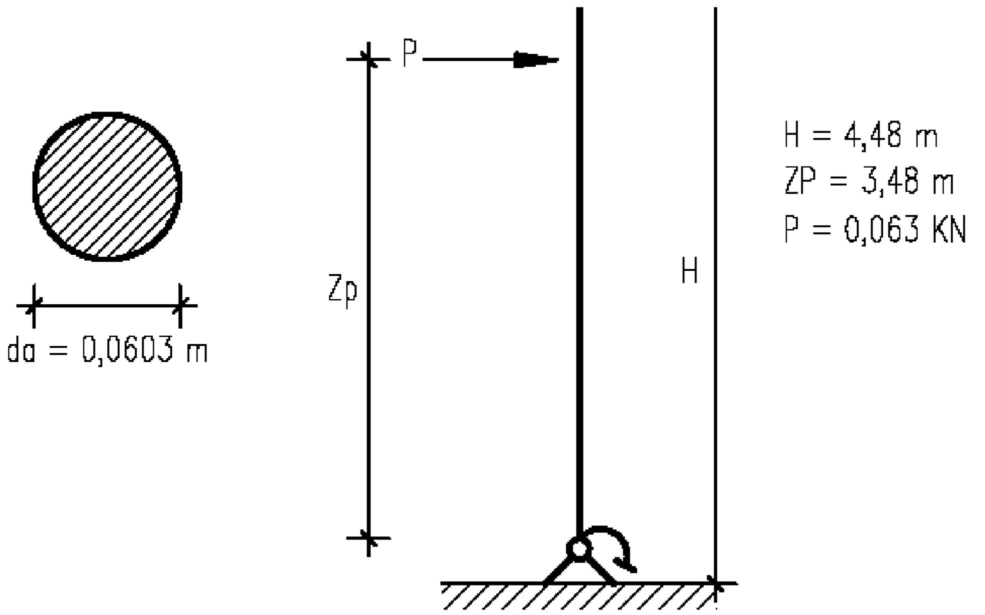


FIG. 14

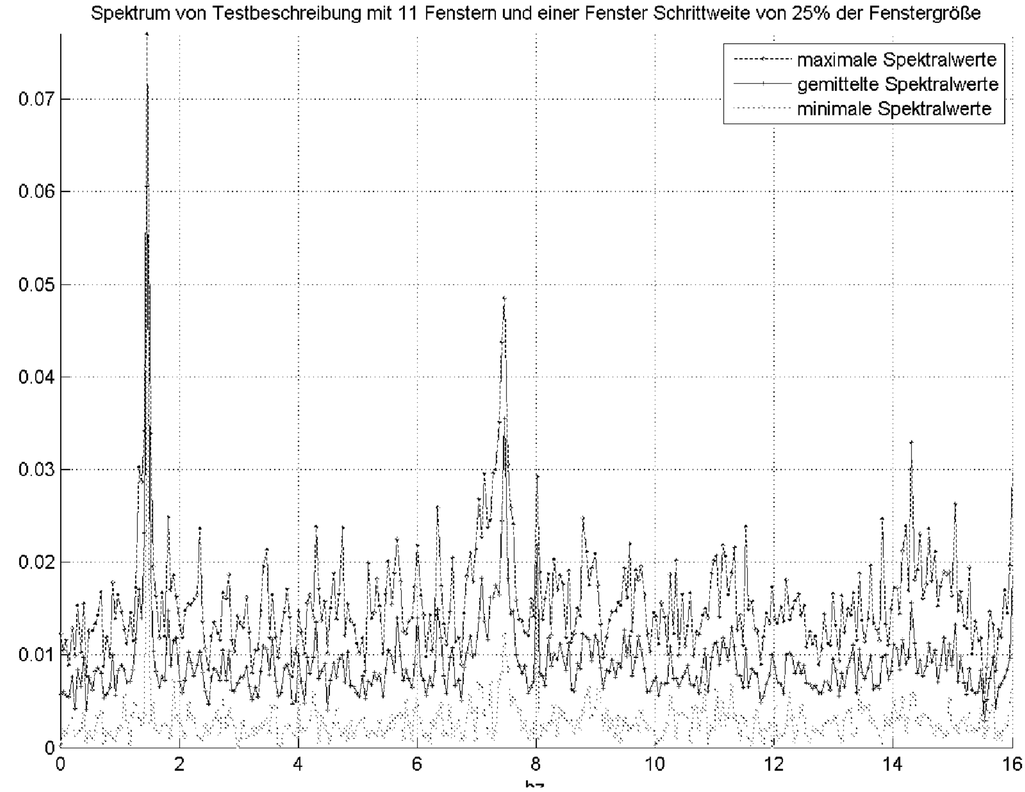
Spektrum von Testbeschreibung mit 11 Fenstern und einer Fenster Schrittweite von 25% der Fenstergröße
maximale Spektralwerte
gemittelte Spektralwerte
minimale Spektralwerte
0.07
0.06
0.05
0.04
0.03
0.02
0.01
0
0
2
4
6
8
10
12
14
16

Fig. 15

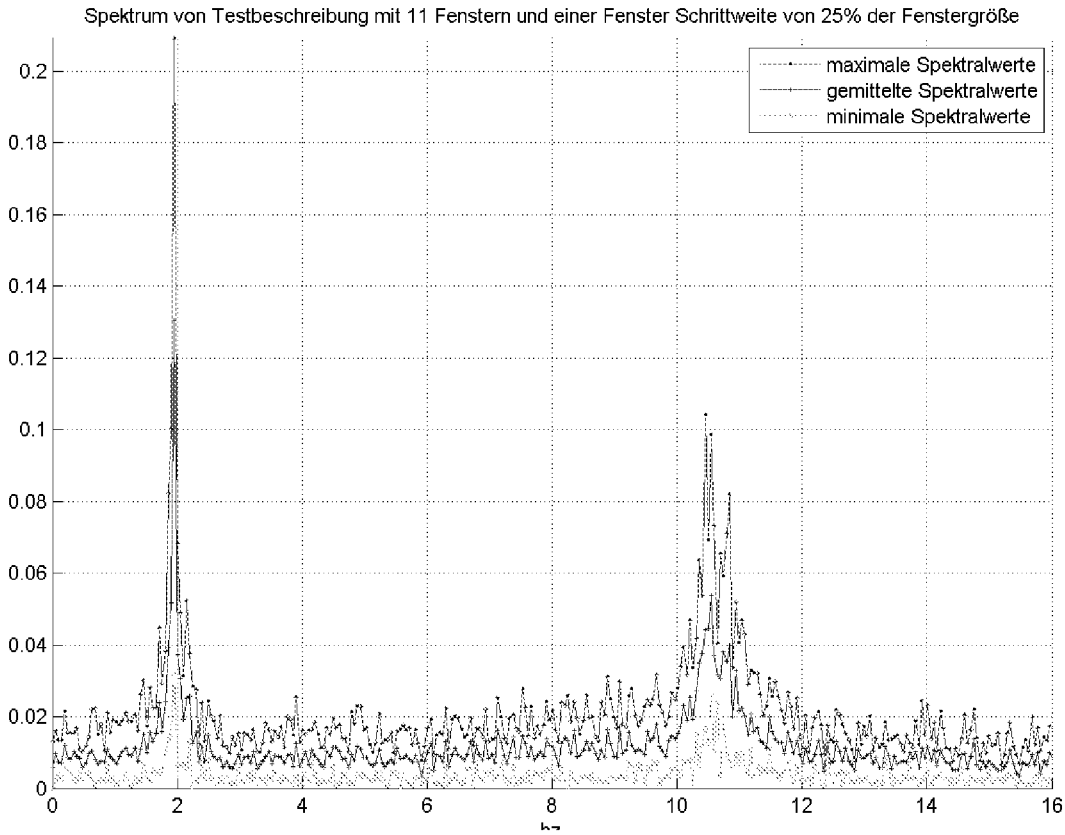
Spektrum von Testbeschreibung mit 11 Fenstern und einer Fenster Schrittweite von 25% der Fenstergröße
maximale Spektralwerte
gemittelte Spektralwerte
minimale Spektralwerte
0.2
0.18
0.16
0.14
0.12
0.1
0.08
0.06
0.04
0.02
0
0
2
4
6
8
10
12
14
16

FIG. 16

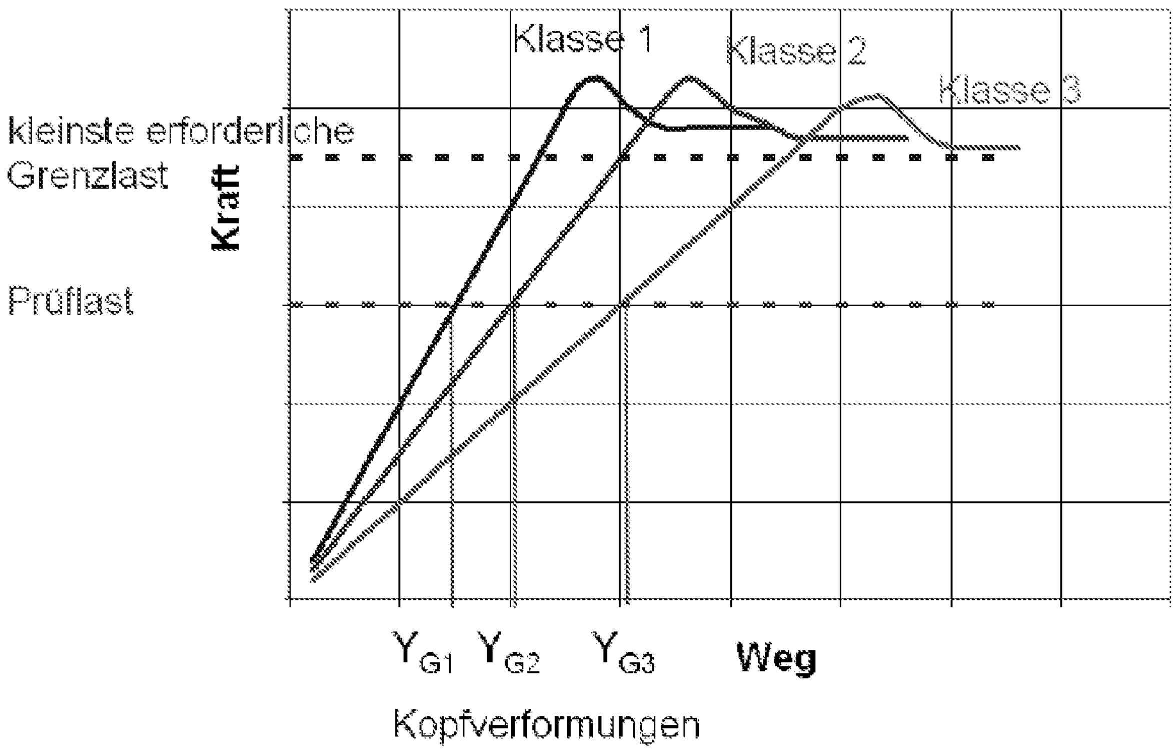
Klasse 1
Klasse 2
Klasse 3
kleinste erforderliche
Grenzlast
Kraft
Prüflast
$Y_{G1}$ $Y_{G2}$ $Y_{G3}$ Weg
Kopfverformungen

FIG. 17

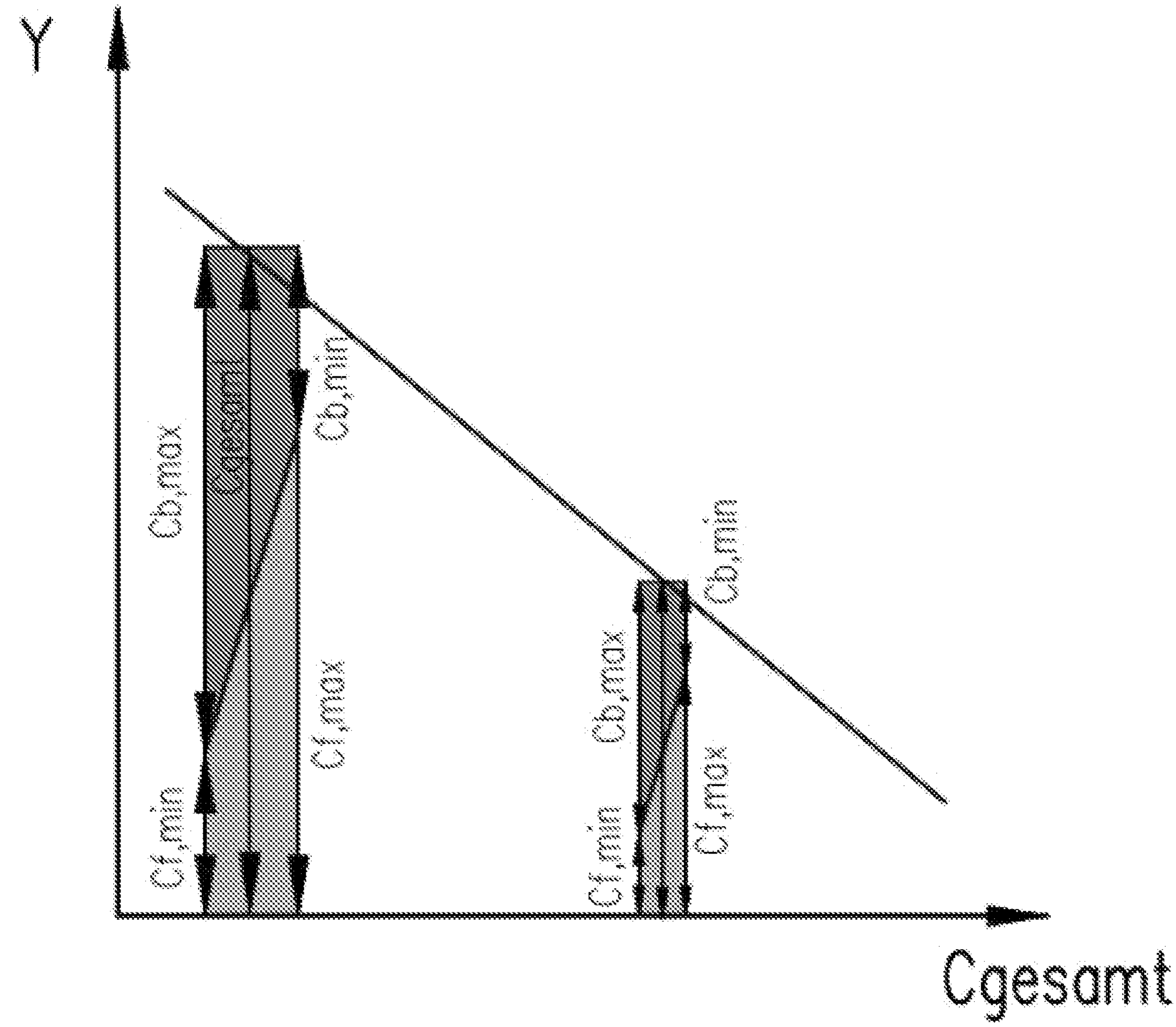
Y
Cgesamt
Cb,max
Cgesamt
Cb,min
Cf,max
Cf,min
Cb,min
Cb,max
Cf,min
Cf,max

FIG. 18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0379622 A1
- WO 2007052239 A2
- DE 102005038033 A1
- DE 19701247 A1
- DE 1573752
- EP 0638794 B1
- DE 29910833 U
- DE 10028872 A1
- DE 10300947 A1
- EP 1517141 A


### In der Beschreibung aufgeführte Nicht-Patentliteratur


- **PETERSEN, CH.** *Dynamik der Baukonstruktionen,* 1996
- **B. G. TEUBNER.** *Neuhaus Helmut, Lehrbuch des Ingenieurholzbaus,* 1994
- Elastizitätszahlen von Fichtenholz in Abhängigkeit von der Holzfeuchtigkeit, Diss. **NEUHAUS, H.** technisch-wissenschaftliche Mitteilungen. Ruhr-Universität-Bochum, 1981
- **NEUHAUS, H.** Über das elastische Verhalten von Fichtenholz in Abhängigkeit von der Holzfeuchtigkeit. *Holz als Roh- und Werkstoff,* 1983, vol. 41, 21-25
- **NEUHAUS, H.** Über das elastische Verhalten von Holz und Kunststoffen. FB Bauingenieurwesen, 1987
- **NOACK D. ; GEISSEN, A.** Einfluss von Temperatur und Feuchtigkeit auf den E-Modul des Holzes im Gefrierbereich. *Holz als Werkstoff,* 1976, vol. 34, 55-62
- **MÖHLER, K.** *Grundlagen der Holz-Hochbaukonstruktionen*
- **GÖTZ K.-H. ; HOOR D. ; MÖHLER K. ; NATTERER J.** *München Inst. Für internationale Architektur-Dokumentation,* 1980
- Mechanical Properties of Wood, Forest Products Laboratory. **DAVID W. GREEN ; JERROLD E. WINANDY ; DAVID E. KRETSCHMANN.** Wood handbook-Wood as an engineering material, .Gen. Tech. Rep. FPL-GTR-113. U.S. Department of Agriculture, 1999, 463